# EUROPÄISCHE PATENTSCHRIFT

(11) **EP 3 595 854 B1**
(45) Veröffentlichungstag und Bekanntmachung des Hinweises auf die Patenterteilung: **03.08.2022**
(21) Anmeldenummer: 18711506.8
(22) Anmeldetag: 09.03.2018
(51) Int. Cl.: B27B 17/08

(54) **KETTENSÄGE**
CHAINSAW
SCIE À CHAÎNE

(30) Priorität: 16.03.2017 DE 102017204372; 06.12.2017 DE 102017222077
(43) Veröffentlichungstag der Anmeldung: 22.01.2020
(73) Patentinhaber: Robert Bosch GmbH, 70442 Stuttgart (DE)
(72) Erfinder: GROENEWALD, Robert, Ipswich Suffolk IP3 9JY (GB); KELLY, Aaron, Stowmarket Suffolk IP145QW (GB); KONCSIK, Tamas, 3793 Sajoecseg (HU); OLANREWAJU, Tolu, Norwich Norfolk NR8 5GG (GB)
(86) Internationale Anmeldenummer: PCT/EP2018/055867
(87) Internationale Veröffentlichungsnummer: WO 2018/166904

(56) Entgegenhaltungen:
- EP-A1- 0 599 550
- EP-A1- 2 432 625
- WO-A1-2010/115438
- US-A- 4 121 339
- US-A- 4 335 514
- US-A- 4 432 139
- US-A- 5 640 773

## Beschreibung

### Stand der Technik

Die vorliegende Erfindung betrifft eine Kettensäge mit einem Gehäuse, in dem eine Antriebseinheit zum Antreiben einer Sägekette angeordnet ist, wobei an dem Gehäuse ein Haupthandgriff und ein Hilfshandgriff angeordnet sind, wobei dem Haupthandgriff ein Bedienelement zum Aktivieren der Antriebseinheit zugeordnet ist, und wobei dem Hilfshandgriff ein Handschutz zum Aktivieren einer Bremsvorrichtung zugeordnet ist.

Aus dem Stand der Technik ist eine derartige Kettensäge bekannt, die ein Gehäuse aufweist, in dem eine Antriebseinheit zum Antreiben einer Sägekette angeordnet ist, wobei die Antriebseinheit einen Antriebsmotor und ein Getriebe aufweist. An dem Gehäuse sind ein Haupthandgriff und ein Hilfshandgriff angeordnet, wobei der Haupthandgriff im Wesentlichen zum Greifen und Führen der Kettensäge im Betrieb dient und der Hilfshandgriff im Wesentlichen zum Tragen und Halten der Kettensäge vorgesehen ist. Dem Haupthandgriff ist ein Bedienelement zum Aktivieren der Antriebseinheit zugeordnet und dem Hilfshandgriff ist ein Handschutz zum Aktivieren einer Bremsvorrichtung zugeordnet. Eine derartige Kettensäge, gemäß dem Oberbegriff des Anspruchs 1, ist beispielsweise aus der WO2010/115592A1 bekannt.

### Offenbarung der Erfindung

Die vorliegende Erfindung stellt eine neue Kettensäge mit einem Gehäuse bereit, in dem eine Antriebseinheit zum Antreiben einer Sägekette angeordnet ist, wobei an dem Gehäuse ein Haupthandgriff und ein Hilfshandgriff, insbesondere Bügelgriff angeordnet sind. Dem Haupthandgriff ist ein Bedienelement zum Aktivieren der Antriebseinheit zugeordnet und dem Hilfshandgriff ist ein Handschutz zum Aktivieren bzw. auslösen einer Bremsvorrichtung zugeordnet. Eine Sicherheitsschaltanordnung ist zur Aktivierung und/oder Deaktivierung der Antriebseinheit vorgesehen, wobei der Sicherheitsschaltanordnung ein erstes und zweites Freigabeelement zugeordnet ist, wobei das erste Freigabeelement zur Ausführung einer ersten Freigabefunktion aktivierbar ist, um eine Aktivierung der Sicherheitsschaltanordnung zu initiieren, und wobei das zweite Freigabeelement zur Ausführung einer zweiten Freigabefunktion aktivierbar ist, um eine Aktivierung der Antriebseinheit über das Bedienelement zu ermöglichen.

Die Erfindung ermöglicht somit die Bereitstellung einer Kettensäge, bei der durch die Sicherheitsschaltanordnung eine sichere Aktivierung der Antriebseinheit ermöglicht werden kann. Somit kann vorteilhafterweise ein ungewolltes Aktivieren der Antriebseinheit zuverlässig verhindert werden.

Das erste Freigabeelement kann dem Handschutz, dem Hilfshandgriff und/oder dem Haupthandgriff zugeordnet sein und das zweite Freigabeelement dem Haupthandgriff und/oder dem Hilfshandgriff z. Somit kann auf einfache Art und Weise eine anwendungsspezifische Zuordnung des ersten und/oder zweiten Freigabeelements ermöglicht werden. Das zweite Freigabeelement kann aber auch dem Handschutz zugeordnet sein, insbesondere dann wenn das erste Freigabeelement dem Haupthandgriff zugeordnet ist.

Gemäß einer Ausführungsform ist das zweite Freigabeelement mit dem Bedienelement gekoppelt. Gemäß einer weiteren Ausführungsform ist das erste Freigabeelement mit dem Bedienelement gekoppelt, insbesondere um das Bedienelement in einer deaktivierten Stellung des ersten Freigabeelements zu sperren (als Sicherheits-Sperrschalter und/oder Anwesenheitssensor). Es können aber auch beide Freigabeelemente mit dem Bedienelement gekoppelt sein. Somit kann eine einfache und stabile Zuordnung des Freigabeelements zum Bedienelement ermöglicht werden, insbesondere dann wenn das erst bzw. zweite Freigabeelement, wie auch das Bedienelement, am Haupthandgriff angeordnet ist.

Ferner kann das am Haupthandgriff ausgebildete Freigabeelement, insbesondere das erste Freigabeelement als Anwesenheitssensor bzw. Anwesenheitsschalter und/oder als Sicherheits-Sperrtaste, insbesondere in Form eines Handhebels und/oder Touchelements ausgebildet sein.

Außerdem kann das am Haupthandgriff ausgebildete Freigabeelement, insbesondere das erste Freigabeelement bzw. der Anwesenheitssensor und/oder die Sicherheits-Sperrtaste, als Hauptschalter der Kettensäge ausgebildet sein. Der Hauptschalter dient zur Herstellung der Stromverbindung zwischen einer Energiequelle, insbesondere einer Batterie, eines Akkumulators und/oder eines Stromnetz und der Steuereinheit der Kettensäge bzw. zur Bestromung des PCB der Kettensäge. Dadurch dass das erste Freigabeelement bzw. der Anwesenheitssensor und/oder die Sicherheits-Sperrtaste zugleich als Hauptschalter ausgebildet ist, kann ein zusätzlicher Hauptschalter eingespart werden, die Aktivierung der Kettensäge wird sicherer und Energie kann eingespart werden.

Gemäß einer Ausführungsform ist das zweite Freigabeelement elektrisch und/oder mechanisch mit dem Bedienelement verbunden. Gemäß einer weiteren Ausführungsform ist das erste Freigabeelement elektrisch und/oder mechanisch mit dem Bedienelement verbunden. Somit kann eine unkomplizierte und zuverlässige Kopplung des zweiten Freigabeelements mit dem Bedienelement ermöglicht werden, insbesondere dann wenn das erst bzw. zweite Freigabeelement, wie auch das Bedienelement, im Haupthandgriff angeordnet ist.

Gemäß einer Ausführung ist eine Anzeigevorrichtung zum visuellen, taktilen und/oder akustischen Anzeigen einer Aktivierung der Sicherheitsschaltanordnung vorgesehen. Somit kann auf einfache Art und Weise eine Aktivierung der Sicherheitsschaltanordnung einem Benutzer der Kettensäge angezeigt werden. Insbesondere in einer weiteren Ausführungsform, kann aber auch eine Anzeigevorrichtung zum visuellen, taktilen und/oder akustischen Anzeigen einer Nichtaktivierbarkeit der Antriebseinheit vorgesehen sein, insbesondere aufgrund einer Stellung des zweiten Freigabeelements oder einer Betätigungsreihenfolge des ersten oder zweiten Freigabeelements, insbesondere einer Betätigungsreihenfolge des zweiten vor dem ersten Freigabeelements.

Das zweite Freigabeelement ist erfindungsgemäβ zur Ausführung der zweiten Freigabefunktion innerhalb von einer ersten vorgegebenen Zeitdauer, vorzugsweise innerhalb von 5 Sekunden nach Initiierung der Aktivierung der Sicherheitsschaltanordnung, aktivierbar, um eine Freigabe des Bedienelements zum Aktivieren der Antriebseinheit zu bewirken. Somit kann eine sichere und zuverlässige Aktivierung der Sicherheitsschaltanordnung mit dem ersten und zweiten Freigabeelement ermöglicht werden.

Gemäß einer Ausführungsform ist nach einem Betrieb der Antriebseinheit bevorzugt eine Betätigung des Bedienelements und/oder eine Betätigung des ersten bzw. zweiten Freigabeelements um eine zweite vorgegebene Zeitdauer, vorzugsweise um maximal eine Sekunde, unterbrechbar, ohne eine Deaktivierung der Sicherheitsschaltanordnung zu veranlassen. Somit kann eine ungewollte Deaktivierung der Sicherheitsschaltanordnung, z.B. bei einem unbeabsichtigten Abrutschen vom Bedienelement, wirksam verhindert werden. Es kann aber auch vor oder nach einem Betrieb der Antriebseinheit und nach einer Aktivierung des zweiten nach dem ersten Freigabeelement (also Freigabe des Betriebs), eine Deaktivierung, insbesondere des ersten Freigabeelements um eine zweite vorgegebene Zeitdauer erfolgen, vorzugsweise um maximal eine Sekunde erfolgen. Somit kann ein bequemes Arbeiten realisiert werden, um beispielsweise für kurze Zeit die Hand vom Haupthandgriff zu lösen um beispielsweise ein Werkstück zurecht zu legen. Dadurch wird auch die Sicherheit der Kettensäge sichergestellt, da bei längerer Deaktivierung des Freigabeelements, insbesondere ein längeres Lösen der Hand vom Haupthandgriff, kein unerwartetes aktivieren der Antriebseinheit möglich ist und. Dadurch wird die Sicherheit gesteigert und es können unerwartete Verletzungen vermieden werden, beispielsweise bei elektrisch betriebenen Kettensägen, bei denen die Betriebsbereitschaft der Säge nicht durch beispielsweise das Motorgeräusch eines Verbrennungsmotors im Leerlauf hörbar ist.

Gemäß einer Ausführungsform ist der Sicherheitsschaltanordnung eine Steuerschaltung zugeordnet, die zumindest dazu ausgebildet ist, eine zeitliche Abfolge der Betätigung des ersten und/oder zweiten Freigabeelements und/oder des Bedienelements zu detektieren. Somit kann sicher und zuverlässig eine Detektion einer Betätigung des ersten und/oder zweiten Freigabeelements und/oder des Bedienelements ermöglicht werden.

Es wird vorgeschlagen, dass die Steuerschaltung durch eine Aktivierung der Sicherheitsschaltanordnung aktivierbar ist. Somit kann auf einfache Art und Weise eine Aktivierung der Steuerschaltung ermöglicht werden.

In einem Ausführungsbeispiel ist bei aktivierter Antriebseinheit und/oder bei freigegebenem zweiten Freigabeelement und/oder bei freigegebenem Bedienelement bevorzugt innerhalb von einer vorgegebenen Zeitdauer, vorzugsweise innerhalb von einer Sekunde, eine Betätigung des Bedienelements oder des zweiten Freigabeelements erforderlich, um eine Deaktivierung der Steuerschaltung zu verhindern. Somit kann eine ungewollte Aktivierung zumindest weitgehend verhindert werden. In einem weiteren Ausführungsbeispiel ist eine vorübergehende Deaktivierung eines ersten Freigabeelements bei aktivierter Antriebseinheit und/oder bei freigegebenem zweitem Freigabeelement und/oder bei freigegebenem Bedienelement möglich ohne eine Deaktivierung der Steuerschaltung einzuleiten. Durch Kenntnis der typischen Betätigungsreihenfolge der Kettensäge und von Bearbeitungs- und/oder Greifschritten bei der Verwendung der Kettensäge kann durch Anwendung dieser Kenntnis durch entsprechende zeitliche Begrenzung einer Aktivierbarkeit der Antriebseinheit oder Einleitung einer Deaktivierung der Steuerschaltung nach überschreiten eines Zeitlimits, die Sicherheit der Kettensäge verbessert werden.

Ferner kann das Freigabeelement am Haupthandgriff, bzw. das erste oder zweite Freigabeelement, als Handhebel und/oder Touchelement ausgebildet sein. Somit kann ein stabiles und robustes Freigabeelement am Haupthandgriff bereitgestellt werden.

Darüber hinaus wird vorgeschlagen, dass eine Betätigung insbesondere Aktivierung des ersten Freigabeelements bzw. des Anwesenheitssensors eine Bestromung, bzw. Versorgung mit Energie, einer Steuereinheit und/oder der Sicherheitsschaltanordnung der Kettensäge bewirkt. Somit kann im Falle einer Akkubetriebenen Kettensäge Akkuleistung gespart werden. Eine Aktivierung des ersten Freigabeelements weckt sozusagen die Steuerung bzw. das PCB der Kettensäge. Daraufhin kann die Sicherheitsschaltanordnung eine Position des zweiten Freigabeelements bzw. eine Aktivierung oder Deaktivierung des zweiten Freigabeelements überprüfen. Die Steuerschaltung kann zudem eine zeitliche Abfolge der Betätigung des ersten und/oder zweiten Freigabeelements und/oder des Bedienelements detektieren. Sofern das zweite Freigabeelement bereits aktiviert ist, wird aus Sicherheitsgründen eine Bestromung der Antriebseinheit bei Betätigen des Bedienelements unterbunden. Das zweite Freigabeelement muss zur Freigabe erst in die inaktive Stellung überführt und aus der inaktiven Stellung wieder in die aktive Stellung überführt werden. Vor dem erneuten aktivieren des zweiten Freigabeelements kann das erste Freigabeelement auch vorübergehend deaktiviert werden. Dadurch kann die Sicherheit der Kettensäge gesteigert werden. Alternativ könnte das zweite Freigabeelement bzw. der Handschutz auch in eine dritte Stellung überführt werden, beispielweise in eine dritte Stellung die den Handschutz noch näher zum Hilfshandgriff verlagert und insbesondere federvorgespannt automatisch in die zweite (aktivierte Position) zurückverlagert. Dieses überführen in die Dritte Stellung, wie es beispielsweise in Der WO 2010/115592A1 auf Seite 11, Zeile 8 bis 31 beschrieben ist, könnte die dort genannte Funktionalität aufweisen, nämlich die Kettensäge anstatt durch Überführung in die deaktivierte bzw. erste Position der Überführung in die dritte Position aktivieren oder deaktivieren.

Das Bedienelement kann dazu ausgebildet sein, eine Geschwindigkeit der Sägekette einzustellen. Somit kann einfach und unkompliziert eine Geschwindigkeitseinstellung ermöglicht werden.

Gemäß einer Ausführungsform ist die Kettensäge nach Art einer Akku-Kettensäge ausgebildet. Somit kann auf einfache Art und Weise eine netzunabhängig betreibbare, vielseitig anwendbare Kettensäge bereitgestellt werden.

Des Weiteren stellt die vorliegende Erfindung ein Verfahren zum Aktivieren einer Antriebseinheit zum Antreiben einer Kettensäge bereit. Die Kettensäge ist mit einem Gehäuse versehen, in dem die Antriebseinheit angeordnet ist, wobei an dem Gehäuse ein Haupthandgriff und ein Hilfshandgriff angeordnet sind, wobei dem Haupthandgriff ein Bedienelement zum Aktivieren der Antriebseinheit zugeordnet ist, insbesondere wobei dem Hilfshandgriff ein Handschutz zum Aktivieren einer Bremsvorrichtung zugeordnet ist, wobei eine Sicherheitsschaltanordnung zur Aktivierung und/oder Deaktivierung der Antriebseinheit vorgesehen ist, der ein erstes und zweites Freigabeelement zugeordnet ist, wobei das erste Freigabeelement zur Ausführung einer ersten Freigabefunktion aktivierbar ist, um eine Aktivierung der Sicherheitsschaltanordnung zu initiieren, und wobei das zweite Freigabeelement zur Ausführung einer zweiten Freigabefunktion aktivierbar ist, um eine Aktivierung der Antriebseinheit über das Bedienelement zu ermöglichen. Eine Aktivierung der Antriebseinheit weist folgende Schritte auf:
a. Ausführen der ersten Freigabefunktion zum Aktivieren der Sicherheitsschaltanordnung, insbesondere wobei eine Anzeigevorrichtung aktiviert wird und visuell, taktil und/oder akustisch eine Aktivierung der Sicherheitsschaltanordnung oder Nicht-Aktivierbarkeit der Antriebseinheit anzeigt,
b. Ausführen der zweiten Freigabefunktion, insbesondere innerhalb einer ersten vorgegebenen Zeitdauer, vorzugsweise innerhalb von 5 Sekunden nach Initiierung der Aktivierung der Sicherheitsschaltanordnung, insbesondere wobei das Bedienelement freigegeben wird,
c. Betätigung des Bedienelements,
d. Starten der Antriebseinheit bei Betätigung des Bedienelements.

Die Erfindung ermöglicht somit die Bereitstellung eines Verfahrens zum Aktivieren einer Antriebseinheit zum Antreiben einer Kettensäge, bei dem durch das Aktivieren der Sicherheitsschaltanordnung eine sichere Aktivierung der Antriebseinheit ermöglicht werden kann. Somit kann vorteilhafterweise ein ungewolltes Aktivieren der Antriebseinheit zuverlässig verhindert werden. Das Verletzungsrisiko durch ein unbeabsichtigtes Aktiveren der Antriebseinheit sinkt.

Ferner ist nach einem Betrieb der Antriebseinheit eine Betätigung des Bedienelements um eine zweite vorgegebene Zeitdauer unterbrechbar, und bei einem Überschreiten der ersten vorgegebenen Zeitdauer und/oder der zweiten vorgegebenen Zeitdauer wird die Antriebseinheit deaktiviert, wobei eine Steuerschaltung, die der Sicherheitsschaltanordnung zugeordnet ist und die zumindest dazu ausgebildet ist, eine zeitliche Abfolge der Betätigung des ersten und/oder zweiten Freigabeelements und/oder des Bedienelements zu detektieren, deaktiviert wird. Somit kann eine ungewollte Deaktivierung der Sicherheitsschaltanordnung, z.B. bei einem unbeabsichtigten Abrutschen vom Bedienelement, wirksam verhindert werden. Darüber hinaus kann auf einfache Art und Weise die Aktivierung der Antriebseinheit durch die Sicherheitsschaltanordnung ermöglicht werden.

Desweiteren muss nach einer Deaktivierung der Antriebseinheit und der dadurch deaktivierten Steuerschaltung zum erneuten Starten der Antriebseinheit die Sicherheitsschaltanordnung erneut aktiviert werden. Somit kann eine unbeabsichtigte Wiederinbetriebnahme der Kettensäge, z.B. nach einem geplanten Abschalten, wirksam und effizient verhindert werden.

In einer weiteren Ausführungsform wird ebenfalls ein Verfahren zum Aktivieren einer Antriebseinheit zum Antreiben einer Kettensäge vorgeschlagen. Die Kettensäge weist einen Haupthandgriff und en Hilfshandgriff auf, wobei dem Haupthandgriff ein Bedienelement zum Aktivieren einer Antriebseinheit und ein insbesondere mit dem Bedienelemente (160) mechanisch und/oder elektrisch verbundenes erstes Freigabeelement (124a) zugeordnet sind. Dem Hilfshandgriff kann ein Handschutz zum Aktivieren einer Bremsvorrichtung zugeordnet sein. Ferner ist eine Sicherheitsschaltanordnung zur Aktivierung und/oder Deaktivierung der Antriebseinheit vorgesehen, der das erstes und ein zweites Freigabeelement zugeordnet sind. Das erste Freigabeelement ist zur Ausführung einer ersten Freigabefunktion aktivierbar, um eine Aktivierung der Sicherheitsschaltanordnung zu initiieren, das zweite Freigabeelement ist zur Ausführung einer zweiten Freigabefunktion aktivierbar, um eine Aktivierung der Antriebseinheit über das Bedienelement zu ermöglichen. Damit ist dem Haupthandgriff das erste Freigabeelement zugeordnet, was insbesondere zugleich den Hauptschalter bzw. Anwesenheitssensor der Kettensäge darstellt.

Eine Aktivierung der Antriebseinheit weist dabei die folgenden Schritte auf:
a) Ausführen der ersten Freigabefunktion zum Aktivieren der Sicherheitsschaltanordnung, insbesondere wobei das Bedienelement mechanisch freigegeben wird.
b) Prüfen mittels der Sicherheitsschaltanordnung, ob das zweite Freigabeelement in einer aktivierten oder deaktivierten Stellung ist.
c) Optional anzeigen mittels einer visuell, taktil und/oder akustisch Anzeigevorrichtung und/oder weiteren Anzeigevorrichtung, ob das zweite Freigabeelement in einer aktivierten oder deaktivierten Stellung ist.
d) Optional überführen des zweiten Freigabeelements aus der aktivierten in die deaktivierte Stellung, sofern das zweite Freigabeelement bereits in der aktivierten Stellung ist.
e) Ausführen der zweiten Freigabefunktion aus einer deaktivierten Stellung in eine aktivierte Stellung des zweiten Freigabeelements, insbesondere innerhalb einer ersten vorgegebenen Zeitdauer, vorzugsweise innerhalb von 5 Sekunden nach Initiierung der Aktivierung der Sicherheitsschaltanordnung.
f) Optional deaktivieren des ersten Freigabeelements für eine insbesondere zweite vorgegeben Zeitdauer, vorzugsweise um maximal eine Sekunde.
g) Starten der Antriebseinheit bei Betätigung des Bedienelements.

Dadurch wird ein Alternatives Verfahren vorgeschlagen, um ein ungewolltes Aktivieren der Antriebseinheit zuverlässig zu verhindert bzw. ein sicheres Aktivieren der Antriebseinheit zu gewährleisten.

Ferner kann das alternative Verfahren den weiteren Schritt aufweisen, dass nach einem Betrieb der Antriebseinheit eine Aktivierung des ersten Freigabeelements und/oder Bedienelements um eine insbesondere zweite vorgegebene Zeitdauer, vorzugsweise um maximal eine Sekunde, unterbrechbar ist, insbesondere ohne eine Deaktivierung der Steuerschaltung und/oder Sicherheitsschaltanordnung zu veranlassen. Damit kann bei einer erneuten Aktivierung des ersten Freigabeelements und einer darauf folgenden oder zumindest gleichzeitigen Betätigung des Bedienelements die Antriebseinheit sicher starten ohne die gesamte Freigabe- bzw. Sicherheitsprozedur erneut durchlaufen zu müssen.

Ferner wird auch eine Kettensäge vorgeschlagen, mit einem Gehäuse, in dem eine Antriebseinheit zum Antreiben einer Sägekette angeordnet ist, wobei an dem Gehäuse ein Haupthandgriff und ein Hilfshandgriff angeordnet sind. Dem Haupthandgriff ist ein Bedienelement zum Aktivieren der Antriebseinheit zugeordnet und dem Hilfshandgriff ist ein Handschutz zum Aktivieren einer Bremsvorrichtung zugeordnet. Eine Sicherheitsschaltanordnung ist zur Aktivierung und/oder Deaktivierung der Antriebseinheit vorgesehen, wobei der Sicherheitsschaltanordnung ein erstes und zweites Freigabeelement zugeordnet ist. Das erste Freigabeelement ist dem Haupthandgriff, das zweite Freigabeelement dem Hilfshandgriff zugeordnet. Das erste Freigabeelement ist zur Ausführung einer ersten Freigabefunktion aktivierbar, um eine Aktivierung des zweiten Freigabeelements zu ermöglichen und wobei das zweite Freigabeelement zur Ausführung einer zweiten Freigabefunktion aktivierbar ist, um eine Aktivierung der Antriebseinheit über das Bedienelement zu ermöglichen. Allerdings verhindert das erste Freigabeelement mechanisch in seiner deaktivierten Ausgangsstellung eine Betätigung des zweiten Freigabeelements und des Bedienelements. Das zweite Freigabeelement verhindert in der einer aktivierten Stellung gleichsam eine Überführung des ersten Freigabeelements von der deaktivierten in die aktivierte Position und damit auch der Aktivierung des Bedienelements. Kurzum ist dies eine mechanische Lösung um eineindeutig eine Betätigungsreihenfolge des ersten Freigabeelements am Haupthandgriff, des zweiten Freigabeelements am Handschutz (dem Hilfshandgriff zugeordnet) und dem Bedienelement am Haupthandgriff in dieser Reihenfolge festzulegen. Andernfalls wird zumindest eine Betätigung des Bedienelements durch das erste- und/oder zweite Freigabeelement zumindest indirekt mechanisch gesperrt. Gleichsam wird ein Verfahren vorgeschlagen dass eine derartige Kettensäge in der vorgenannten Betätigungsreihenfolge aktiviert und bei einer anderen Betätigungsreihenfolge eine Aktivierung sperrt.

### Kurze Beschreibung der Zeichnungen

Die Erfindung ist anhand von in den Zeichnungen dargestellten Ausführungsbeispielen in der nachfolgenden Beschreibung näher erläutert. Es zeigen:
- Fig. 1: eine perspektivische Seitenansicht einer Kettensäge mit einer Sicherheitsschaltanordnung gemäß einer Ausführungsform mit einem ersten und zweiten Freigabeelement gemäß einer Ausführungsform,
- Fig. 2: eine perspektivische Seitenansicht der Kettensäge mit der Sicherheitsschaltanordnung von Fig. 1, mit einem zweiten Freigabeelement gemäß einer weiteren Ausführungsform,
- Fig. 3: eine teilweise geschnittene Seitenansicht der Kettensäge von Fig. 1 und Fig. 2,
- Fig. 4: eine Seitenansicht der Kettensäge von Fig. 1 bis Fig. 3 mit der Sicherheitsschaltanordnung von Fig. 1 bis Fig. 3,
- Fig. 5: eine beispielhafte Schalttabelle zum Betrieb der Kettensäge von Fig. 1 bis Fig. 4,
- Fig. 6: eine perspektivische Seitenansicht der Kettensäge von Fig. 1 bis Fig. 4 mit einer Sicherheitsschaltanordnung gemäß einer weiteren Ausführungsform,
- Fig. 7: eine Seitenansicht der Kettensäge mit der Sicherheitsschaltanordnung von Fig. 6,
- Fig. 8: eine beispielhafte Schalttabelle zum Betrieb der Kettensäge von Fig. 6 und Fig. 7,
- Fig. 9: eine perspektivische Seitenansicht der Kettensäge von Fig. 1 bis Fig. 4 mit einer Sicherheitsschaltanordnung gemäß einer weiteren Ausführungsform,
- Fig. 10: eine Seitenansicht der Kettensäge mit der Sicherheitsschaltanordnung von Fig. 9,
- Fig. 11: eine beispielhafte Schalttabelle zum Betrieb der Kettensäge von Fig. 9 und Fig. 10,
- Fig. 12: eine Seitenansicht einer Kettensäge mit einer alternativen Sicherheitsschaltanordnung, und
- Fig. 13: ein Verfahren zum Betrieb der Kettensäge gemäß Fig. 12.

### Beschreibung der Ausführungsbeispiele

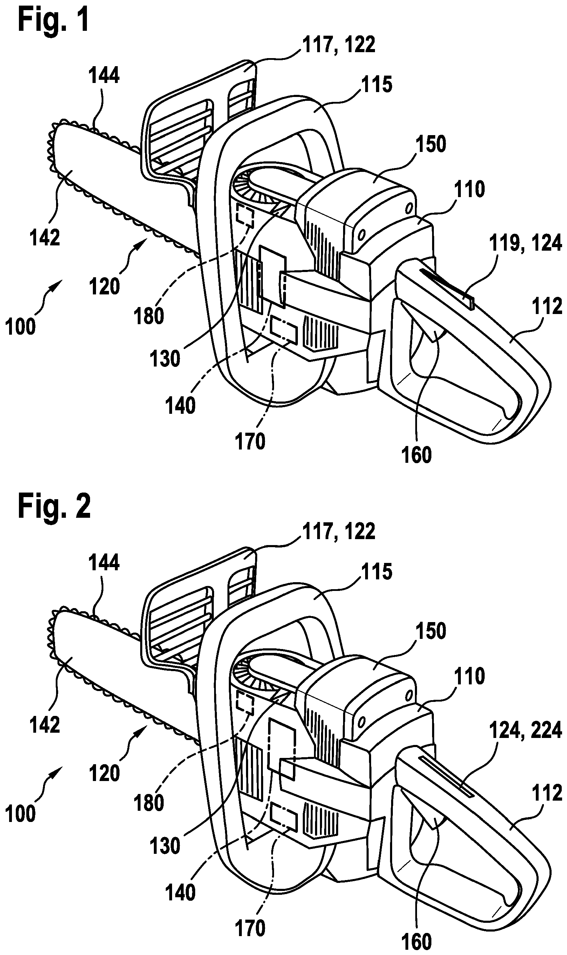

Fig. 1 zeigt eine vorzugsweise als Kettensäge ausgebildete Handwerkzeugmaschine 100 mit einem Gehäuse 110. In dem Gehäuse 110 ist bevorzugt eine Antriebseinheit 140 zum Antrieb einer Sägekette 144 angeordnet. Die Sägekette 144 ist vorzugsweise auf einer Führungsschiene 142 gelagert. Dabei ist die Sägekette 144 vorzugsweise im Betrieb durch eine Bremsvorrichtung 180 abbremsbar. Die Bremsvorrichtung 180 ist bevorzugt zum Abbremsen und/oder Blockieren der Antriebseinheit 140 bzw. der Sägekette 144 ausgebildet.

Des Weiteren weist das Gehäuse 110 bevorzugt einen Haupthandgriff 112 und einen Hilfshandgriff 115 auf, wobei der Haupthandgriff 112 zumindest im Wesentlichen zum Greifen und Führen der Kettensäge 100 im Betrieb dient und der Hilfshandgriff 115 im Wesentlichen zum Tragen und Halten der Kettensäge 100 vorgesehen ist. Vorzugsweise ist dem Haupthandgriff 112 ein Bedienelement 160 zum Aktivieren der Antriebseinheit 140 zugeordnet und/oder dem Hilfshandgriff 115 ist bevorzugt ein Handschutz 117 zum Aktivieren der Bremsvorrichtung 180 zugeordnet.

Illustrativ und vorzugsweise ist die Kettensäge 100 nach Art einer Akku-Kettensäge mit einem Akkupack 150 ausgebildet. Jedoch kann die Kettensäge 100 auch mit einem Netzkabel zur Stromversorgung ausgebildet sein oder einen Verbrennungsmotor aufweisen.

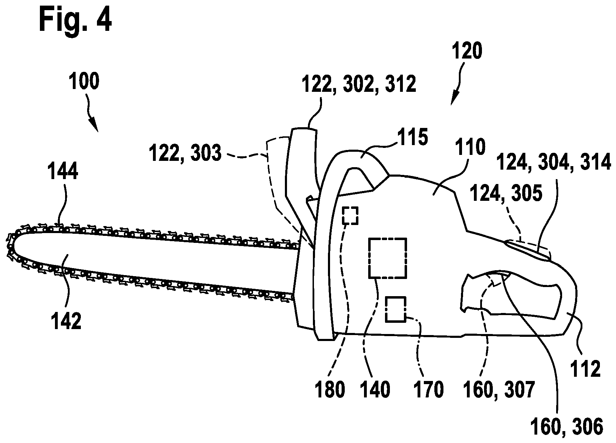

Bevorzugt ist der Kettensäge 100 eine Sicherheitsschaltanordnung 120 zur Aktivierung und/oder Deaktivierung der Antriebseinheit 140 vorgesehen. Der Sicherheitsschaltanordnung 120 ist vorzugsweise ein erstes und zweites Freigabeelement 122, 124 zugeordnet. Das erste Freigabeelement 122 ist bevorzugt zur Ausführung einer ersten Freigabefunktion (312 in Fig. 4) aktivierbar, um eine Aktivierung der Sicherheitsschaltanordnung 120 zu initiieren, und das zweite Freigabeelement 124 ist vorzugsweise zur Ausführung einer zweiten Freigabefunktion (314 in Fig. 4) aktivierbar, um eine Aktivierung der Antriebseinheit 140 über das Bedienelement 160 zu ermöglichen. Dabei kann das erste Freigabeelement 122 dem Handschutz 117, dem Hilfshandgriff 115 und/oder dem Haupthandgriff 112 zugeordnet sein und das zweite Freigabeelement 124 kann dem Haupthandgriff 112 und/oder dem Hilfshandgriff 115 zugeordnet sein. Gemäß der in Fig. 1 gezeigten Ausführungsform ist das erste Freigabeelement 122 dem Handschutz 117 zugeordnet und das zweite Freigabeelement 124 ist dem Haupthandgriff 112 zugeordnet.

Vorzugsweise ist das zweite Freigabeelement 124 mit dem Bedienelement 160 gekoppelt. Das zweite Freigabeelement 124 ist dabei vorzugsweise elektrisch und/oder mechanisch mit dem Bedienelement 160 verbunden.

Das Bedienelement 160 wird bei einer Inbetriebnahme der Kettensäge 100 bevorzugt erst dann freigegeben, wenn das zweite Freigabeelement 124 zuvor aktiviert bzw. betätigt wurde. Das zweite Freigabeelement 124 ist bevorzugt zur Ausführung der zweiten Freigabefunktion (314 in Fig. 4) innerhalb von einer ersten vorgegebenen Zeitdauer (t1 in Fig. 4), vorzugsweise innerhalb von 5 Sekunden nach Initiierung der Aktivierung der Sicherheitsschaltanordnung 120, aktivierbar, um eine Freigabe des Bedienelements 160 zum Aktivieren der Antriebseinheit 140 zu bewirken. Darüber hinaus ist das Bedienelement 160 vorzugsweise dazu ausgebildet, eine Geschwindigkeit der Sägekette 144 einzustellen, d.h. eine entsprechende Drehzahl der Antriebseinheit 140 vorzugeben.

Das zweite Freigabeelement 124 kann z.B. als Handhebel 119 und/oder Touchelement (224 in Fig. 2) ausgebildet sein. In Fig. 1 ist das zweite Freigabeelement 124 illustrativ als Handhebel 119 ausgebildet.

Darüber hinaus weist die Kettensäge 100 bevorzugt eine Anzeigevorrichtung 130 zum visuellen und/oder akustischen Anzeigen einer Aktivierung der Sicherheitsschaltanordnung 120 auf. In Fig. 1 ist die Anzeigevorrichtung 130 illustrativ als LED ausgebildet; jedoch kann die Anzeigevorrichtung 130 auch als akustische Anzeige, z.B. als Summer, Piezoelement und/oder Lautsprecher ausgebildet sein.

Vorzugsweise ist die beispielhaft als LED ausgebildete Anzeigevorrichtung 130 zwischen dem Hilfshandgriff 115 und dem Haupthandgriff 112 angeordnet. Es wird jedoch darauf hingewiesen, dass die Anzeigevorrichtung 130 auch an einer beliebig anderen Stelle an der Kettensäge 100 angeordnet sein könnte, z.B. an einem der Handgriffe 112, 115.

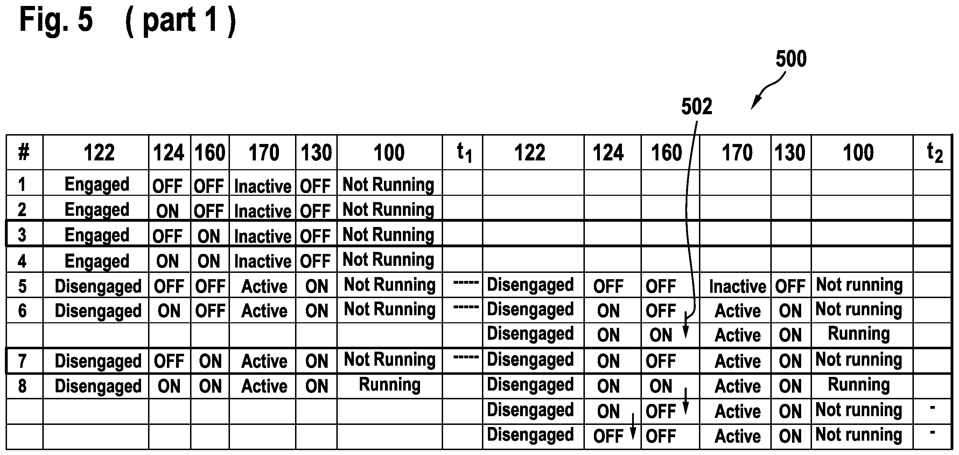

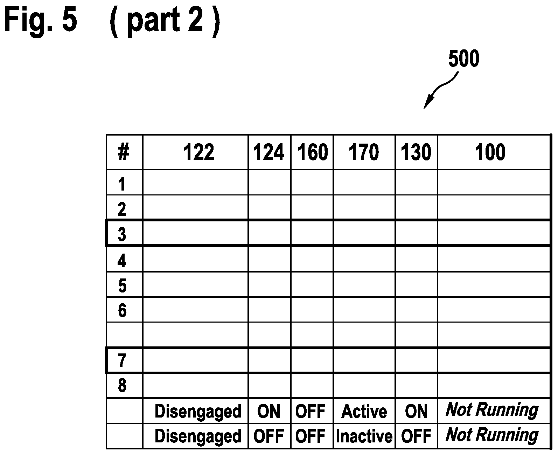

Bevorzugt ist nach einem Betrieb der Antriebseinheit 140 eine Betätigung des Bedienelements 160 um eine zweite vorgegebene Zeitdauer (t2 in Fig. 5), vorzugsweise um maximal eine Sekunde, unterbrechbar, ohne eine Deaktivierung der Sicherheitsschaltanordnung 120 zu veranlassen. Allerdings ist bei freigegebenem Bedienelement 160 und/oder bei aktivierter Antriebseinheit 140 und/oder bei freigegebenem zweiten Freigabeelement 124 vorzugsweise innerhalb der zweiten vorgegebenen Zeitdauer (t2 in Fig. 5), eine erneute Betätigung des Bedienelements 160 oder des zweiten Freigabeelements 124 erforderlich, um eine Deaktivierung einer der Sicherheitsschaltanordnung 120 zugeordneten Steuerschaltung 170 zu verhindern.

Gemäß einer Ausführungsform ist die Steuerschaltung 170 zumindest dazu ausgebildet, eine zeitliche Abfolge der Betätigung des ersten und/oder zweiten Freigabeelements 122, 124 und/oder des Bedienelements 160 zu detektieren. Dabei ist die Steuerschaltung 170 vorzugsweise durch eine Aktivierung der Sicherheitsschaltanordnung 120 aktivierbar.

Nachfolgend wird ein Verfahren zur Inbetriebnahme der Kettensäge 100 gemäß einer Ausführungsform, bzw. ein Verfahren zum Aktivieren der Antriebseinheit 140 zum Antreiben der Kettensäge 100 gemäß einer Ausführungsform, beschrieben. Hierbei wird zuerst vor einem Starten der Antriebseinheit 140 die Sicherheitsschaltanordnung 120 aktiviert. Vorzugsweise wird hierzu zunächst durch eine Betätigung des Handschutzes 117 das erste Freigabeelement 122 und somit die erste Freigabefunktion (312 in Fig. 4) aktiviert. Dabei wird vorzugsweise die Anzeigevorrichtung 130 aktiviert, die visuell und/oder akustisch eine Aktivierung der Sicherheitsschaltanordnung 120 anzeigt. Nachfolgend wird durch Betätigung des zweiten Freigabeelements 124 die zweite Freigabefunktion (314 in Fig. 4) ausgeführt, wobei die zweite Freigabefunktion innerhalb der ersten vorgegebenen Zeitdauer (t1 in Fig. 5), vorzugsweise innerhalb von 5 Sekunden nach Initiierung der Aktivierung der Sicherheitsschaltanordnung 120, aktiviert wird. Danach ist das Bedienelement 160 freigegeben und kann bei einer Betätigung die Antriebseinheit 140 starten.

Allerdings wird bei einem Überschreiten der zweiten vorgegebenen Zeitdauer (t2 in Fig. 5) bevorzugt die Antriebseinheit 140 deaktiviert, wobei vorzugsweise die Steuerschaltung 170 deaktiviert wird. Vorzugsweise muss nach einer Deaktivierung der Antriebseinheit 140 und der dadurch deaktivierten Steuerschaltung 170 zum erneuten Starten der Antriebseinheit 140 die Antriebseinheit 140 erneut aktiviert werden.

Fig. 2 zeigt die Kettensäge 100 von Fig. 1 mit der Sicherheitsschaltanordnung 120. Gemäß einer alternativen Ausführungsform ist das zweite Freigabeelement 124 nun als Touchelement 224 ausgebildet.

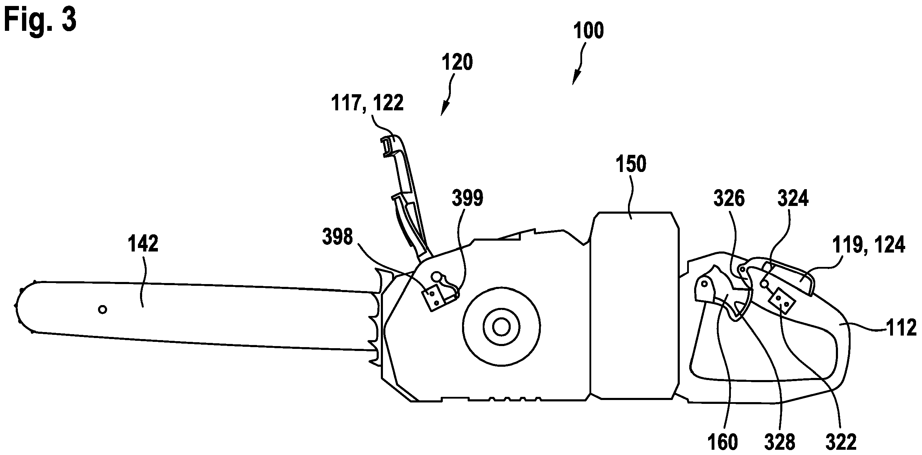

Fig. 3 zeigt die Kettensäge 100 von Fig. 1 und verdeutlicht eine beispielhafte mechanische Verbindung des ersten Freigabeelements 122 mit dem Bedienelement 160. Dabei weist das vorzugsweise als Handhebel 119 ausgebildete zweite Freigabeelement 124 bevorzugt an seinem der Führungsschiene 142 von Fig. 1 zugewandten Ende ein Blockierelement 326 auf.

Das Blockierelement 326 blockiert in einer deaktivierten Stellung des zweiten Freigabeelements 124 bevorzugt das Bedienelement 160. In einer aktivierten Stellung des zweiten Freigabeelements 124 kann das Blockierelement 326 vorzugsweise entlang einer Innenkontur 328 des Bedienelements 160 verfahren werden und das Bedienelement 160 freigeben.

Darüber hinaus ist das zweite Freigabeelement 124 vorzugsweise mittels eines Federelements 324 federbeaufschlagt. Des Weiteren ist dem zweiten Freigabeelement 124 beispielhaft ein Schaltelement 322 zur Detektion einer Betätigung zugeordnet. Das Schaltelement 322 ist bevorzugt mit dem Federelement 324 verbunden, wobei das Federelement 324 bei einer Betätigung das Schaltelement 322 beaufschlagt und hierdurch eine Detektion der Betätigung ermöglicht. Vorzugsweise ist das Schaltelement 322 mit der Steuerschaltung 170 verbunden und sendet bevorzugt bei einer Betätigung des zweiten Freigabeelements 124 ein Schaltsignal an die Steuerschaltung 170.

Das zweite Freigabeelement 124 ist bevorzugt zwischen einer Sperrposition (305 in Fig. 4), in der eine zweite Freigabefunktion 314 deaktiviert ist, und einer Freigabeposition (304 in Fig. 4), in der die zweite Freigabefunktion 314 aktiviert ist, bewegbar. Vorzugsweise ist in der Sperrposition das Bedienelement 160 gesperrt und in der Freigabeposition ist das Bedienelement 160 freigegeben.

Darüber hinaus verdeutlicht Fig. 3 das beispielhaft als Handschutz 117 ausgebildete erste Freigabeelement 122 von Fig. 1, dem vorzugsweise zur Detektion einer Betätigung ein Schaltelement 398 zugeordnet ist. Analog zum Schaltelement 322 des zweiten Freigabeelements 124, ist das Schaltelement 398 zur Detektion einer Betätigung ausgebildet. Vorzugsweise ist zur Beaufschlagung des Schaltelements 398 dem ersten Freigabeelement 122 ein Beaufschlagungselement 399 zugeordnet. Bevorzugt sendet das Schaltelement 398 bei einer Beaufschlagung bzw. Aktivierung ein Schaltsignal an die Steuerschaltung 170. Vorzugsweise sind die Schaltelemente 322, 398 als Mikroschalter ausgebildet.

Das erste Freigabeelement 122 ist bevorzugt zwischen einer Sperrposition (303 in Fig. 4), in der eine erste Freigabefunktion 312 deaktiviert ist, und einer Freigabeposition (302 in Fig. 4), in der die erste Freigabefunktion 312 aktiviert ist, bewegbar. Vorzugsweise ist in der Sperrposition die Bremsvorrichtung 180 von Fig. 1 aktiviert und in der Freigabeposition ist die Bremsvorrichtung 180 deaktiviert.

Fig. 4 zeigt die Kettensäge 100 von Fig. 1 und Fig. 3, bei der das erste Freigabeelement 122 dem Handschutz 117 zugeordnet ist und das zweite Freigabeelement 124 dem Haupthandgriff 112 zugeordnet ist. Vorzugsweise ist das erste Freigabeelement 122 zur Ausführung der ersten Freigabefunktion 399 aktivierbar, um bevorzugt eine Aktivierung der Sicherheitsschaltanordnung 120 zu initiieren. Dabei ist das erste Freigabeelement 122 zwischen einer Sperrposition 303, in der die erste Freigabefunktion 312 von Fig. 3 deaktiviert ist, und einer Freigabeposition 302, in der die erste Freigabefunktion 312 aktiviert ist, bewegbar. Vorzugsweise ist in der Sperrposition 303 die Bremsvorrichtung 180 aktiviert und in der Freigabeposition 302 ist die Bremsvorrichtung 180 deaktiviert. Gemäß einer Ausführungsform ist das erste Freigabeelement 122 von der Sperrposition 303 in die Freigabeposition 302 verschwenkbar, wozu vorzugsweise ein Bewegen des ersten Freigabeelements 122 in Richtung des Haupthandgriffs 112 erfolgt.

Darüber hinaus verdeutlicht Fig. 4 das zweite Freigabeelement 124, dass zur Ausführung der zweiten Freigabefunktion 314 von Fig. 3 aktivierbar ist, um bevorzugt eine Aktivierung der Antriebseinheit 140 über das Bedienelement 160 zu ermöglichen. Dabei ist das zweite Freigabeelement 124 in einer Sperrposition 305, in der die zweite Freigabefunktion 314 deaktiviert ist und einer Freigabeposition 304, in der die zweite Freigabefunktion 314 aktiviert ist, anordenbar. Vorzugsweise ist in der Sperrposition 305 das Bedienelement 160 gesperrt und in der Freigabeposition 304 ist das Bedienelement 160 freigegeben. Gemäß einer Ausführungsform ist das zweite Freigabeelement 124 von der Sperrposition 305 in die Freigabeposition 304 bewegbar, wobei vorzugsweise ein Bewegen des zweiten Freigabeelements 124 in Richtung des Bedienelements 160 erfolgt.

Des Weiteren verdeutlicht Fig. 4 das Bedienelement 160 in einer Sperrposition 307 und einer Freigabeposition 306. Zur Anordnung des Bedienelements 160 in der Freigabeposition 306 bzw. zum Aktivieren des Bedienelements 160, müssen gemäß einer Ausführungsform zuvor die dem ersten und zweiten Freigabeelement 122, 124 zugeordneten Freigabefunktionen 312, 314 von Fig. 3 aktiviert sein.

Es wird jedoch darauf hingewiesen, dass ein Aktivieren der ersten und/oder zweiten Freigabefunktionen 312, 314 und/oder des Bedienelements 160 auch durch eine beliebig andere Bewegung erfolgen kann und/oder auch ein Berühren eines Berührungssensors bzw. Touchelements eine Aktivierung der ersten und/oder zweiten Freigabefunktion ermöglichen kann.

Fig. 5 zeigt eine der Kettensäge 100 von Fig. 1 bis Fig. 4 zugeordnete, beispielhafte Schalttabelle 500, die bevorzugt bei einer Inbetriebnahme der Kettensäge 100 Anwendung findet. Dabei verdeutlicht Fig. 5 mögliche Schaltzustände der Kettensäge 100, wobei im linken Teil der Schalttabelle 500 in den Zeilen 1 bis 8 mögliche Schaltzustände gezeigt sind und in den rechten Teilen der Schalttabelle 500 Folgezustände der möglichen Schaltzustände dargestellt sind.

Hierbei kann das erste Freigabeelement 122 der Kettensäge 100 in einer "Engaged"-Position, die der Sperrposition 303 von Fig. 4 entspricht, und einer "Disengaged"-Position, die der Freigabeposition 302 von Fig. 4 entspricht, angeordnet sein. Des Weiteren können das zweite Freigabeelement 124, das Bedienelement 160 und die Anzeigevorrichtung 130 in einer aktivierten Position "ON" oder einer deaktivierten Position "OFF" angeordnet sein. Darüber hinaus kann die Steuerschaltung 170 aktiviert ("Active") oder deaktiviert ("Inactive") sein und die Kettensäge 100 bzw. die Antriebseinheit 140 kann eingeschaltet bzw. in Betrieb sein ("Running"), oder nicht ("Not Running").

Um die Kettensäge 100 bzw. die Antriebseinheit 140 zu starten, muss zuerst das erste Freigabeelement 122, gemäß der Ausführungsform von Fig. 1 bis Fig. 4 der Handschutz 117, in die Freigabeposition 302 gebracht werden bzw. die erste Freigabefunktion 312 muss aktiviert werden. Dabei wird vorzugsweise gleichzeitig die Steuerschaltung 170 aktiviert und die Anzeigevorrichtung 130 zeigt eine Aktivierung der Steuerschaltung 170 an. Danach beginnt eine erste Zeitdauer t1 von bevorzugt 5 Sekunden zu laufen. Das zweite Freigabeelement 124 muss zur Ausführung der zweiten Freigabefunktion 314 innerhalb der vorgegebenen Zeitdauer t1 aktiviert werden, um eine Freigabe des Bedienelements 160 zum Aktivieren der Antriebseinheit 140 zu bewirken. Es wird darauf hingewiesen, dass die Schaltstellungen der Zeile 3 und Zeile 7 lediglich bei einer elektrischen Verbindung des zweiten Freigabeelements 124 mit dem Bedienelement 160 realisierbar sind.

Zeile 5 verdeutlicht, dass wenn bei aktivierter erster Freigabefunktion 312 und aktivierter Steuerschaltung 170, sowie bei aktivierter Anzeigevorrichtung 130, nicht innerhalb der ersten Zeitdauer t1 von vorzugsweise 5 Sekunden eine Aktivierung des zweiten Freigabeelements 124 erfolgt, die Steuerschaltung 170 und die Anzeigevorrichtung 130 deaktiviert werden. Nach einer Deaktivierung der Antriebseinheit 140 bzw. einer Deaktivierung der Steuerschaltung 170 muss zum erneuten Starten der Antriebseinheit 140, die Sicherheitsschaltanordnung 120 erneut aktiviert werden.

Des Weiteren verdeutlich Zeile 6, dass bei einer Aktivierung des zweiten Freigabeelements 124 innerhalb der ersten Zeitdauer t1, wie durch einen Pfeil 502 angedeutet, die Kettensäge 100 in Betrieb genommen wird. Darüber hinaus verdeutlicht Zeile 8 beispielhaft, dass bei einem Deaktivieren bzw. Loslassen des Bedienelements 160 innerhalb einer zweiten vorgegebenen Zeitdauer t2, die Steuerschaltung 170 aktiviert bleibt. Bei einem Deaktivieren des Bedienelements 160 und des zweiten Freigabeelements 124 für einen Zeitraum, der länger als die zweite Zeitdauer t2 ist, wird die Steuerschaltung 170 und damit die Anzeigevorrichtung 130 bevorzugt deaktiviert.

Allgemein ist bevorzugt bei aktivierter bzw. in Betrieb genommener Kettensäge 100 bzw. bei aktivierter Antriebseinheit 140 und/oder bei freigegebenem zweiten Freigabeelement 124 und/oder bei freigegebenem Bedienelement 160 innerhalb von einer zweiten vorgegebenen Zeitdauer t2, vorzugsweise innerhalb von einer Sekunde, eine erneute Betätigung des Bedienelements 160 oder des zweiten Freigabeelements 124 erforderlich, um eine Deaktivierung der Steuerschaltung 170 zu verhindern.

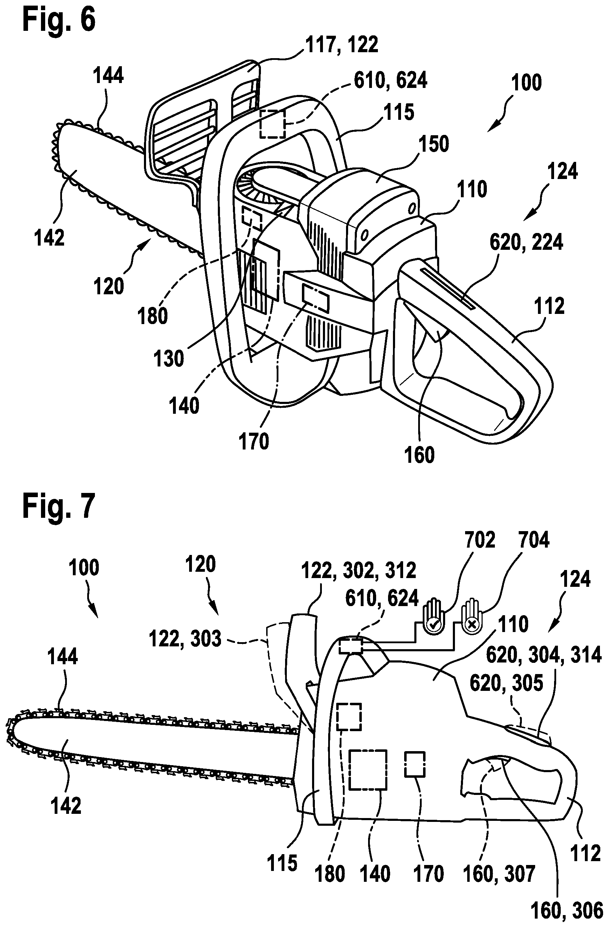

Fig. 6 zeigt die Kettensäge 100 von Fig. 1 bis Fig. 4 mit der Sicherheitsschaltanordnung 120 von Fig. 1 bis Fig. 4, die nun jedoch gemäß einer alternativen Ausführungsform ausgebildet ist. Das zweite Freigabeelement 124 der Sicherheitsschaltanordnung 120 weist dabei vorzugsweise zwei Betätigungselemente 610, 620 auf. Vorzugsweise ist das zweite Betätigungselement 620 als das Touchelement 224 von Fig. 2 ausgebildet und das erste Betätigungselement 610 ist bevorzugt als ein dem Hilfshandgriff 115 zugeordnetes Touchelement 624 ausgebildet. Illustrativ ist das Touchelement 624 zumindest abschnittsweise am Hilfshandgriff 115 ausgebildet, kann jedoch auch entlang des kompletten Hilfshandgriffs 115 ausgebildet sein. Darüber hinaus kann das erste Betätigungselement 610 auch als Handhebel ausgebildet sein.

Zum Aktivieren der zweiten Freigabefunktion 314 von Fig. 3 muss das zweite Freigabeelement 124 aktiviert werden, d.h. vorzugsweise das Touchelement 620 und das Touchelement 624. Darüber hinaus kann eine Aktivierung des zweiten Freigabeelements 124 gemäß einer weiteren Ausführungsform durch eine Aktivierung des Touchelements 620 und/oder des Touchelements 624 erfolgen. Dabei kann eine zeitliche Abfolge zur Betätigung der Touchelemente 620, 624 vorgegeben sein oder nur eine initiale Betätigung eines der beiden Touchelemente 620, 624 kann vorgegeben sein. Hierbei kann auch gemäß einer Ausführungsform zuerst das Touchelement 624 und dann das Touchelement 620 betätigt werden, um die zweite Freigabefunktion 314 zu aktivieren.

Fig. 7 zeigt die Kettensäge 100 mit dem zweiten Freigabeelement 124 von Fig. 6, wobei das erste Betätigungselement 620 als Handhebel 119 ausgebildet ist und das zweite Betätigungselement 610 als Touchelement 624 ausgebildet ist.

Vorzugsweise ist das erste Freigabeelement 122 von Fig. 1 bis Fig. 4 zur Ausführung der ersten Freigabefunktion 312 von Fig. 4 aktivierbar, um wie oben beschrieben bevorzugt eine Aktivierung der Sicherheitsschaltanordnung 120 zu initiieren. Dabei ist das erste Freigabeelement 122 in der Sperrposition 303 von Fig. 4, in der die erste Freigabefunktion 312 deaktiviert ist, und der Freigabeposition 302 von Fig. 4, in der die erste Freigabefunktion 312 aktiviert ist, anordenbar.

Darüber hinaus ist das zweite Betätigungselement 620 bevorzugt in der Sperrposition 305 von Fig. 4 und der Freigabeposition 304 von Fig. 4 anordenbar und das erste Betätigungselement 610 ist in einer Sperrposition 704, in der das erste Freigabeelement 122 nicht aktiviert ist, und in einer Freigabeposition 702, in der das erste Freigabeelement 122 aktiviert ist, anordenbar. Bevorzugt wird das erste Betätigungselement 610 bzw. das Touchelement 624 durch eine Berührung aktiviert.

Vorzugsweise ist in der Sperrposition 305 das Bedienelement 160 gesperrt und in der Freigabeposition 304 ist das Bedienelement 160 freigegeben. Zum Aktivieren der zweiten Freigabefunktion 314 muss das zweite Freigabeelement 124 aktiviert werden bzw. das erste und zweite Betätigungselement 610, 620 in ihrer Freigabeposition 702, 304 angeordnet werden.

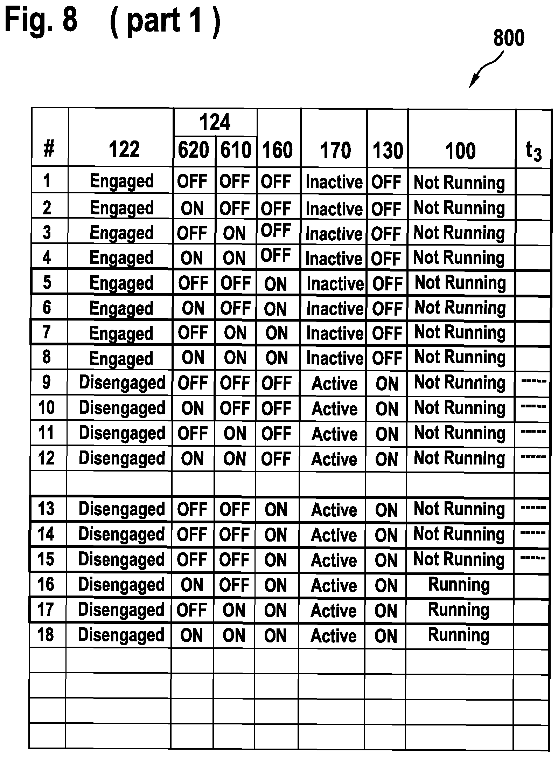

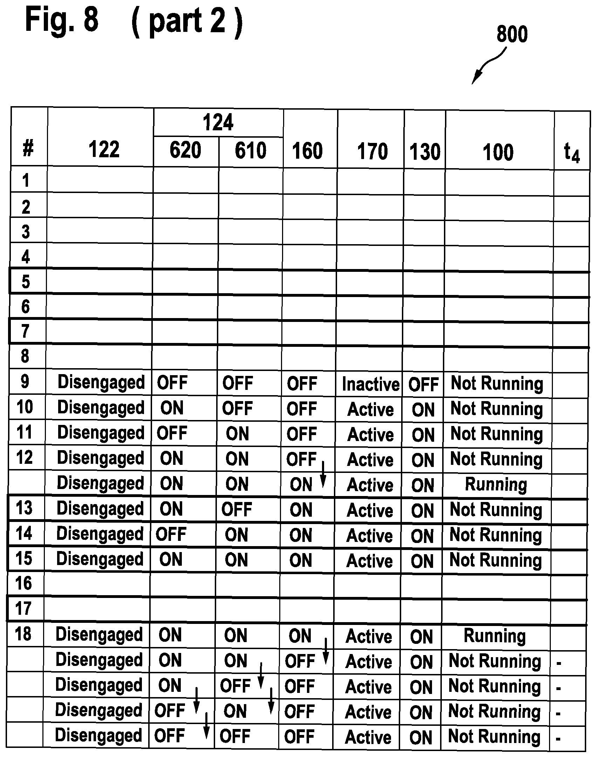

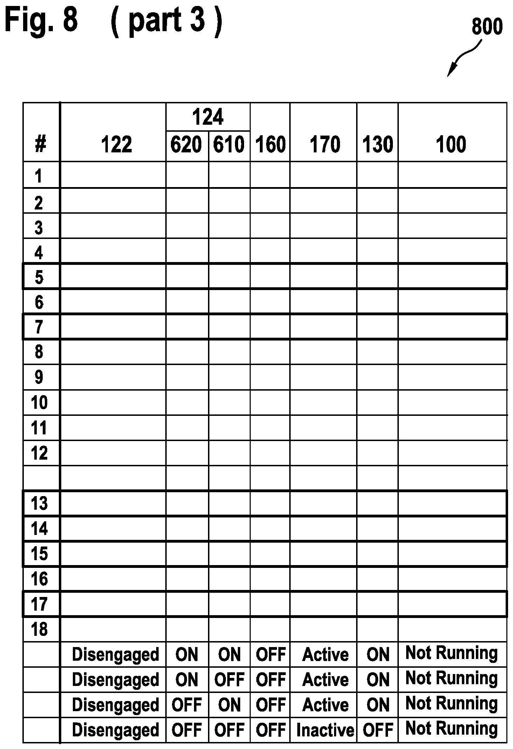

Fig. 8 zeigt eine der Kettensäge 100 von Fig. 6 und Fig. 7 zugeordnete beispielhafte Schalttabelle 800, die bevorzugt bei einer Inbetriebnahme der Kettensäge 100 Anwendung findet. Dabei verdeutlicht Fig. 8 mögliche Schaltzustände der Kettensäge 100, wobei im linken Teil der Schalttabelle 800 in den Zeilen 1 bis 18 die möglichen Schaltzustände gezeigt sind und in den rechten Teilen der Schalttabelle 800 Folgezustände der möglichen Schaltzustände dargestellt sind.

Dabei kann das erste Freigabeelement 122 von Fig. 6 und Fig. 7 in einer "Engaged"-Position, die der Sperrposition 303 von Fig. 4 entspricht, und einer "Disengaged"-Position, die der Freigabeposition 302 von Fig. 4 entspricht, angeordnet sein. Des Weiteren können das zweite Freigabeelement 124 bzw. das erste und zweite Betätigungselement 610, 620, das Bedienelement 160 und die Anzeigevorrichtung 130 in einer aktivierten Position "ON" oder einer deaktivierten Position "OFF" angeordnet sein. Darüber hinaus kann die Steuerschaltung 170 aktiviert ("Active") oder deaktiviert ("Inactive") sein und die Kettensäge 100 bzw. die Antriebseinheit 140 kann eingeschaltet bzw. in Betrieb sein ("Running"), oder nicht ("Not Running").

Um die Kettensäge 100 bzw. die Antriebseinheit 140 zu starten, muss zuerst das erste Freigabeelement 122, bzw. der Handschutz 117, in die Freigabeposition 302 gebracht werden bzw. die erste Freigabefunktion 312 muss aktiviert werden. Dabei wird vorzugsweise gleichzeitig die Steuerschaltung 170 aktiviert und die Anzeigevorrichtung 130 zeigt eine Aktivierung der Steuerschaltung 170 an. Danach beginnt eine erste Zeitdauer t3 von bevorzugt 5 Sekunden zu laufen. Das zweite Freigabeelement 124 muss zur Ausführung der zweiten Freigabefunktion 314 innerhalb der vorgegebenen ersten Zeitdauer t3 aktiviert werden, um eine Freigabe des Bedienelements 160 zum Aktivieren der Antriebseinheit 140 zu bewirken. Dabei müssen, wie oben beschrieben, vorzugsweise das erste und zweite Betätigungselement 610, 620 aktiviert werden bzw. in ihrer Freigabeposition 702, 304 angeordnet werden. Es wird darauf hingewiesen, dass die Schaltstellungen gem. Zeile 5, 7, 13-15 und 17 lediglich bei einer elektrischen Verbindung des zweiten Freigabeelements 124 mit dem Bedienelement 160 realisierbar sind.

Zeile 9 verdeutlicht, dass wenn bei aktiviertem ersten Freigabeelement 122 und aktivierter Steuerschaltung 170, sowie bei aktivierter Anzeigevorrichtung 130 nicht innerhalb der ersten Zeitdauer t3 von vorzugsweise 5 Sekunden eine Aktivierung des zweiten Freigabeelements 124 erfolgt, die Steuerschaltung 170 und die Anzeigevorrichtung 130 deaktiviert werden. Nach einer Deaktivierung der Antriebseinheit 140 bzw. einer Deaktivierung der Steuerschaltung 170 muss zum erneuten Starten der Antriebseinheit 140 die Sicherheitsschaltanordnung 120 erneut aktiviert werden.

Des Weiteren verdeutlichen die Zeilen 10 bis 12, dass ein Entsperren des Bedienelements 160 nur dann erfolgt, wenn das zweite Freigabeelement 124 aktiviert ist, wobei dies vorzugsweise nur erfolgt, wenn das erste und zweite Betätigungselement 610, 620 aktiviert sind. Dabei muss das zweite Freigabeelement 124 bevorzugt innerhalb der ersten Zeitdauer t3 nach einer Aktivierung des ersten Freigabeelements 122 aktiviert werden. Darüber hinaus verdeutlichten die Zeilen 16 und 17 eine Ausführungsform, bei der lediglich eines der beiden Betätigungselemente 610, 620 aktiviert sein muss, um die Kettensäge 100 zu starten.

Darüber hinaus verdeutlicht Zeile 18 beispielhaft, dass bei einem Deaktivieren bzw. Loslassen des Bedienelements 160 innerhalb einer zweiten vorgegebenen Zeitdauer t4 die Steuerschaltung 170 aktiviert bleibt und bevorzugt bei einem Deaktivieren des Bedienelements 160 und des ersten und/oder zweiten Betätigungselements 610, 620, das länger als die zweite Zeitdauer t4 ist, die Steuerschaltung 170 und damit die Anzeigevorrichtung 130 deaktiviert wird. Allgemein ist bevorzugt bei aktivierter bzw. in Betrieb genommener Kettensäge 100 bzw. bei aktivierter Antriebseinheit 140 und/oder bei freigegebenem zweiten Freigabeelement 124 und/oder bei freigegebenem Bedienelement 160 innerhalb von der zweiten vorgegebenen Zeitdauer t4, vorzugsweise innerhalb von einer Sekunde, eine erneute Betätigung des Bedienelements 160 oder des zweiten Freigabeelements 124 erforderlich, um eine Deaktivierung der Steuerschaltung 170 zu verhindern. Dabei kann eine Betätigung des zweiten Freigabeelements 124, wie oben beschrieben, ein Aktivieren des ersten und/oder zweiten Betätigungselements 610, 620 sein.

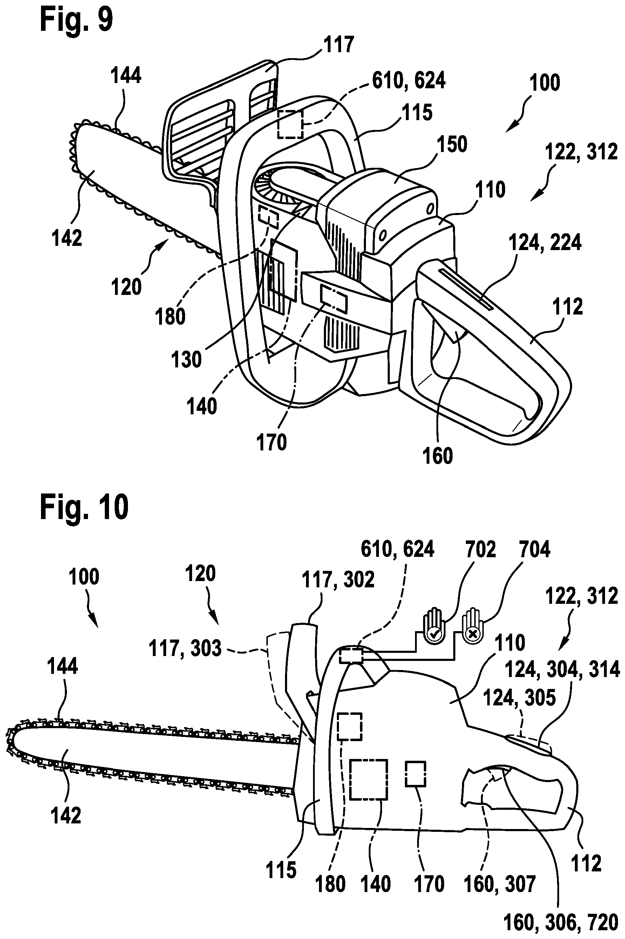

Fig. 9 zeigt die Kettensäge 100 von Fig. 1 bis Fig. 4 mit der Sicherheitsschaltanordnung 120 von Fig. 1 bis Fig. 4, die gemäß einer weiteren alternativen Ausführungsform ausgebildet ist. Das erste Freigabeelement 122 der Sicherheitsschaltanordnung 120 weist dabei vorzugsweise das Betätigungselement von Fig. 6 und Fig. 7, sowie ein weiteres Betätigungselement 720 auf. Vorzugsweise ist das erste Betätigungselement 610 als das Touchelement 624 von Fig. 6 und Fig. 7 ausgebildet und das zweite Betätigungselement 720 ist dem Bedienelement 160 von Fig. 1 bis Fig. 4 zugeordnet. Illustrativ ist das Touchelement 624 zumindest abschnittsweise am Hilfshandgriff 115 ausgebildet, kann jedoch auch entlang des kompletten Hilfshandgriffs 115 ausgebildet sein.

Zum Aktivieren der ersten Freigabefunktion 312 von Fig. 4 muss das erste Freigabeelement 122 aktiviert werden, d.h. vorzugsweise müssen das Touchelement 624 und das Bedienelement 160 in ihrer Freigabeposition 702, 306 angeordnet werden. Darüber hinaus kann eine Aktivierung des ersten Freigabeelements 122 bzw. der ersten Freigabefunktion 312 gemäß einer weiteren Ausführungsform durch eine Aktivierung des Touchelements 624 und/oder des Bedienelements 160 erfolgen. Dabei kann eine zeitliche Abfolge zur Betätigung der Betätigungselemente 610, 720 vorgegeben sein oder nur eine initiale Betätigung eines der beiden Touchelemente 610, 720 kann vorgegeben sein. Des Weiteren kann auch gemäß einer Ausführungsform zuerst das Bedienelement 160 und dann das Touchelement 624 betätigt werden, um die erste Freigabefunktion 712 zu aktivieren. Darüber hinaus kann auch eine Aktivierung der ersten Freigabefunktion 312 durch eine beliebige andere Aktivierungsreihenfolge erfolgen, z.B. durch ein Aktivieren des ersten Betätigungselements 610 und des zweiten Freigabeelements 124. Es wird jedoch darauf hingewiesen, dass in der in Fig. 9 beschriebenen Ausführungsform eine Aktivierung der Sicherheitsschaltanordnung 120 durch eine Aktivierung des ersten Freigabeelements 122 bzw. die erste Freigabefunktion 312 erfolgt, jedoch zum Aktivieren der Antriebseinheit 140 eine Deaktivierung des Handschutzes 117 bzw. der Bremsvorrichtung 180 erforderlich ist, wobei eine Betätigung des Handschutzes 117 nicht der Aktivierung der Sicherheitsschaltanordnung 120 zugeordnet ist.

Fig. 10 zeigt die Kettensäge 100 mit dem ersten Freigabeelement 122 von Fig. 9, wobei das erste Betätigungselement 620 als Handhebel 119 ausgebildet ist. Vorzugsweise ist das erste Freigabeelement 122 zur Ausführung der ersten Freigabefunktion 312, wie oben beschrieben, durch eine Aktivierung des ersten und zweiten Betätigungselements 610, 720 aktivierbar. Hierbei wird bevorzugt eine Aktivierung der Sicherheitsschaltanordnung 120 initiiert. Dabei ist das erste Betätigungselement 610 in der Sperrposition 704, in der das Freigabeelement 610 nicht aktiviert ist, und in der Freigabeposition 702, in der das Freigabeelement 610 aktiviert ist, anordenbar. Des Weiteren ist das als Bedienelement 160 ausgebildete, zweite Betätigungselement 720 in der Sperrposition 307 und der Freigabeposition 306 anordenbar. Bevorzugt wird dabei das erste Betätigungselement 610 bzw. das Touchelement 624 durch eine Berührung aktiviert.

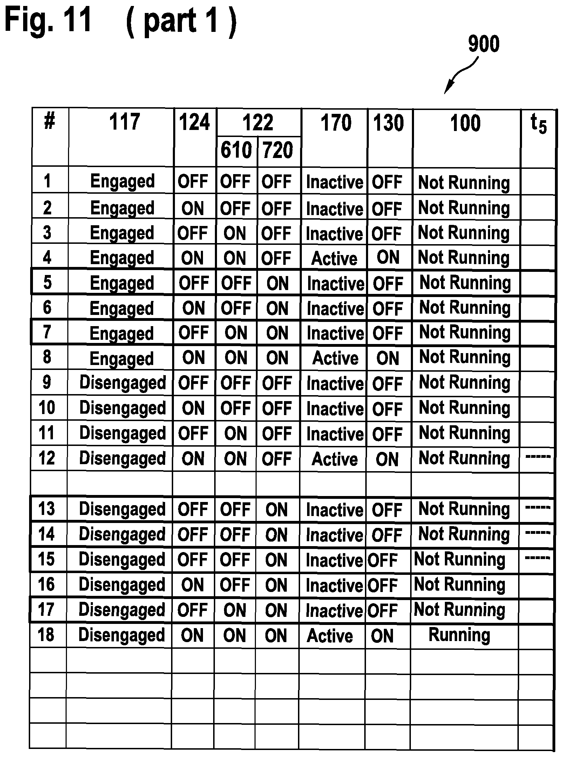

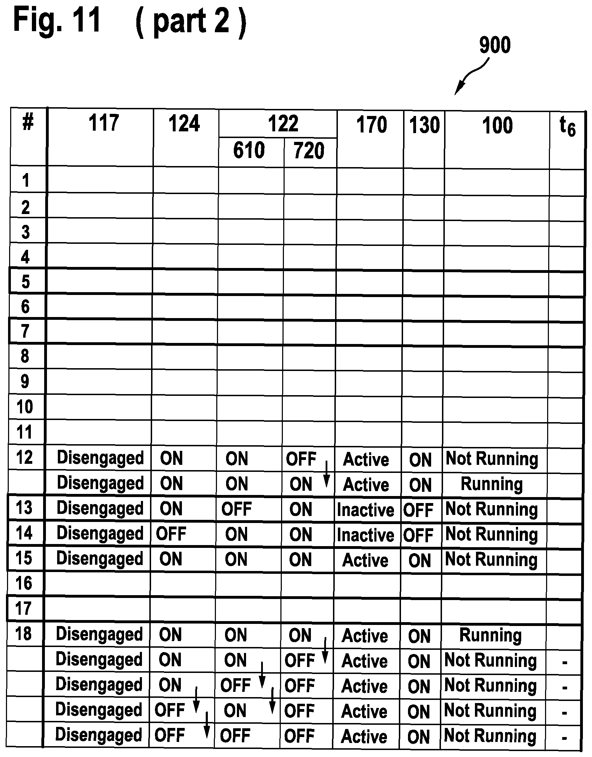

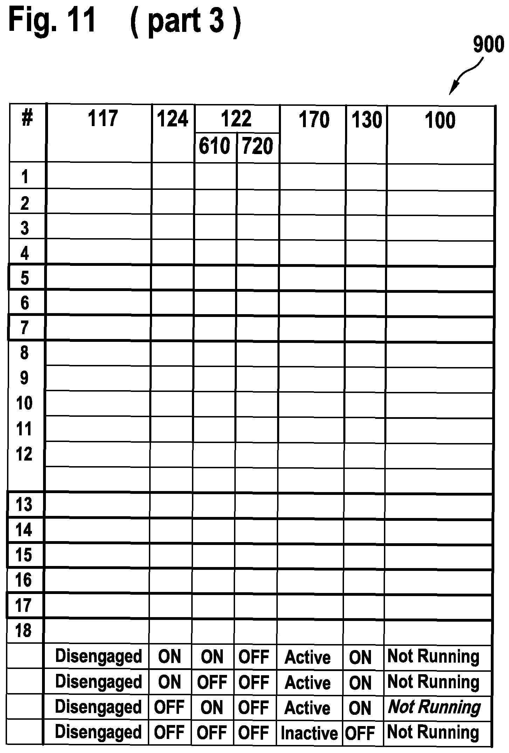

Zum Aktivieren der Antriebseinheit 140 muss, wie oben beschrieben, nach einer Aktivierung des ersten Freigabeelements 122 bzw. der ersten Freigabefunktion 312 innerhalb einer ersten Zeitdauer (t5 in Fig. 11) von vorzugsweise 5 Sekunden das zweite Freigabeelement 124 aktiviert werden.

Fig. 11 zeigt eine der Kettensäge 100 von Fig. 9 und Fig. 10 zugeordnete, beispielhafte Schalttabelle 900 die bevorzugt bei einer Inbetriebnahme der Kettensäge 100 Anwendung findet. Dabei verdeutlicht Fig. 11 mögliche Schaltzustände der Kettensäge 100, wobei im linken Teil der Schalttabelle 900 in den Zeilen 1 bis 18 die möglichen Schaltzustände gezeigt sind und in den rechten Teilen der Schalttabelle 900 Folgezustände der möglichen Schaltzustände dargestellt sind. Dabei kann der Handschutz 117 in einer "En-gaged"-Position, die der die Bremsvorrichtung 180 gesperrt ist, und in einer "Disengaged"-Position, in der die Bremsvorrichtung 180 freigegeben ist, angeordnet sein. Des Weiteren können das erste Freigabeelement 122 bzw. das erste und zweite Betätigungselement 610, 720, das zweite Freigabeelement 124 und die Anzeigevorrichtung 130 in einer aktivierten Position "ON" oder einer deaktivierten Position "OFF" angeordnet sein. Darüber hinaus kann die Steuerschaltung 170 aktiviert ("Active") oder deaktiviert ("Inactive") sein und die Kettensäge 100 bzw. die Antriebseinheit 140 kann eingeschaltet bzw. in Betrieb sein ("Running"), oder nicht ("Not Running").

Um die Kettensäge 100 bzw. die Antriebseinheit 140 zu starten, muss zuerst die Sicherheitsschaltanordnung 120 aktiviert werden. Dies geschieht gemäß einer Ausführungsform durch Betätigen des ersten Betätigungselements 610 und des zweiten Freigabeelements 124. Dabei wird vorzugsweise gleichzeitig die Steuerschaltung 170 aktiviert und die Anzeigevorrichtung 130 zeigt eine Aktivierung der Steuerschaltung 170 an. Anschließend muss der Handschutz 117 in der "Disengaged"-Position angeordnet werden. Danach beginnt eine erste Zeitdauer t5 von bevorzugt 5 Sekunden zu laufen. Das Bedienelement 160 ist nun freigegeben und muss zur Aktivierung der Antriebseinheit 140 innerhalb der vorgegebenen ersten Zeitdauer t5 aktiviert werden. Dies wird in Zeile 12 dargestellt. Es wird darauf hingewiesen, dass die Schaltstellungen der Zeile 5, 7, 13-15 und 17 lediglich bei einer elektrischen Verbindung des zweiten Freigabeelements 124 und des Bedienelements 160 realisierbar sind.

Darüber hinaus verdeutlicht Zeile 18 beispielhaft, dass bei einem Deaktivieren bzw. Loslassen des Bedienelements 160 innerhalb einer zweiten vorgegebenen Zeitdauer t6 die Steuerschaltung 170 aktiviert bleibt und bevorzugt bei einem Deaktivieren des zweiten Freigabeelements 124 und des ersten und/oder zweiten Betätigungselements 610, 620, das länger als die zweite Zeitdauer t6 ist, die Steuerschaltung 170 und damit die Anzeigevorrichtung 130 deaktiviert wird. Allgemein ist bevorzugt bei aktivierter Kettensäge 100 bzw. bei aktivierter Antriebseinheit 140 und/oder bei freigegebenem ersten und zweiten Freigabeelement 122, 124 und/oder bei freigegebenem Bedienelement 160 innerhalb von einer zweiten vorgegebenen Zeitdauer t6, vorzugsweise innerhalb von einer Sekunde, eine erneute Betätigung des jeweiligen Elements 122, 124, 160 erforderlich, um eine Deaktivierung der Steuerschaltung 170 zu verhindern. Dabei kann eine Aktivierung der Sicherheitsschaltanordnung 120 durch ein Aktivieren des ersten Betätigungselements 610 und des zweiten Freigabeelements 124 erfolgen. Alternativ kann eine Aktivierung der Sicherheitsschaltanordnung 120 auch durch ein Aktivieren des ersten und zweiten Betätigungselements 610, 720 erfolgen.

Es wird darauf hingewiesen, dass die oben beschriebenen vorgegebenen Zeitdauern lediglich beispielhaften Charakter haben und nicht als Einschränkung der Erfindung zu sehen sind, so kann die erste Zeitdauer auch kleiner oder größer als 5 Sekunden und/oder die zweite Zeitdauer auch kleiner oder größer als 1 Sekunde sein. Des Weiteren wird darauf hingewiesen, dass die einzelnen Bedien- und/oder Betätigungselemente 117, 122, 610, 624, 119, 124, 224, 160 durch eine Betätigung aktiviert werden können, die in unterschiedlichen Formen erfolgen kann, z.B. durch ein Verschwenken, Drücken, Berühren. Dabei sollen vorzugsweise das erste und zweite Freigabeelement 122, 124, bzw. die erste und zweite Freigabefunktionen 312, 314 von Fig. 4, durch zwei unterschiedliche Betätigungen aktiviert werden.

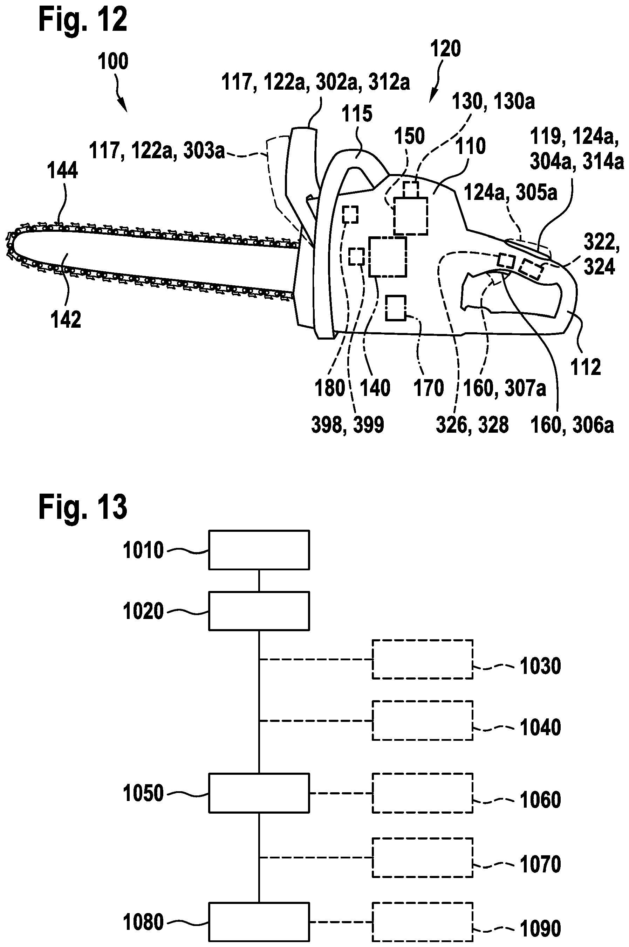

Fig. 12 zeigt eine weitere Ausführungsform einer Kettensäge 100. Weitere vergleichbare Handwerkzeugmaschinen könnten jedoch auch Heckenscheren, Astscheren, Hochentaster oder dergleichen sein, die eine ähnliche Griffkonstellation mit zwei Freigabeelementen aufweisen. Der prinzipielle Aufbau der Kettensäge 100 ist ähnlich zum Aufbau der zuvor beschriebenen Kettensägen, weshalb lediglich unterschiedliche Bauteile mit Bezugszeichen mit Suffix a versehen wurde. Der Fachmann wird die Gleichteile und Unterschiede erkennen und zu sinnvollen Kombinationen mit den vorgenannten Ausführungsbeispielen zusammenführen. Es ist gleichermaßen eine Sicherheitsschaltanordnung 120 zur Aktivierung und/oder Deaktivierung der Antriebseinheit 140 vorgesehen. Der Sicherheitsschaltanordnung 120 ist ein erstes und zweites Freigabeelement 122a, 124a zugeordnet. Das erste Freigabeelement 124a ist jedoch dem Haupthandgriff 112a und das zweite Freigabeelement 122a dem Hilfshandgriff 115 bzw. dem Handschutz 117 zugeordnet. Das erste Freigabeelement 124a ist zur Ausführung einer ersten Freigabefunktion 314a vorgesehen, um zumindest eine Aktivierung der Sicherheitsschaltanordnung 120 zu initiieren. Das erste Freigabeelement 124a stellt jedoch auch den Hauptschalter der Kettensäge 100 dar. Durch Aktivierung des ersten Freigabeelements 124a wird sozusagen der Versorgungsschalter aktiviert und die Bestromung der Steuereinheit bzw. des PCB der Kettensäge 100 durch den Akku 150 ausgelöst. Im vorliegenden Fall liegt erst dadurch die Netz-, Batterie oder Akkuspannung an der Steuereinheit an. Dadurch kann Standby-Energie eingespart werden, was wiederum zumindest die Laufleistung der Kettensäge je Akkuladung verlängern kann. Infolge der Bestromung der Steuereinheit bzw. durch Freigeben des ersten Freigabeelements 124a wird auch die Sicherheitsschaltanordnung 120 aktiviert. Im Ausführungsbeispiel gemäß Fig. 12 ist das zweite Freigabeelement 122a zur Ausführung einer zweiten Freigabefunktion 312a betätigbar bzw. aktivierbar, um eine Aktivierung der Antriebseinheit 140 über das Bedienelement 160 zu ermöglichen. Dies erfolgt durch Überführung des zweiten Freigabeelements 122a aus einer Sperrposition 302a in eine Freigabeposition 303a. Das zweite Freigabeelement 122a ist dem Hilfshandgriff 115 bzw. dem Handschutz 117 zugeordnet.

Vorzugsweise ist das erste Freigabeelement 124a mit dem Bedienelement 160 gekoppelt, vorzugsweise elektrisch und/oder mechanisch gekoppelt und insbesondere mechanisch mit dem Bedienelement 160 verbunden. Das Bedienelement 160 wird zwar durch Betätigung des ersten Freigabeelements 124a mechanisch freigegeben, jedoch führt eine Betätigung des Bedienelements 160 deshalb noch zu keiner Aktivierung der Antriebseinheit 140. Die Abtriebseinheit 140 wird erst dann zur Aktivierung bzw. zum Start durch Betätigen des Bedienelements 160 freigegeben, wenn das zweite Freigabeelement 122a nach dem ersten Freigabeelement 124a aktiviert bzw. betätigt wurde und zwar aus einer inaktiven Position oder Sperrposition 302a in eine aktive Position oder Freigabeposition 303a. Sofern das zweite Freigabeelement 122a bereits in einer Freigabeposition 303a ist, wird noch keine Aktivierung der Antriebseinheit 140 durch Betätigen des Bedienelements 160 ermöglicht. Erst muss das zweite Freigabeelement 122a bzw. der Handschutz 117 oder alternativ auch ein Berührungsschalter oder dergleichen am Hilfshandgriff 115 in die inaktive bzw. deaktivierte Position bzw. Sperrposition 302a und dann erneut in die Freigabeposition 303a überführt werden.

Ferner kann eine Zeitdauer, in der das zweite Freigabeelement 122a zur Ausführung der zweiten Freigabefunktion nach Initiierung der Aktivierung der Sicherheitsschaltanordnung 120 aktiviert werden muss, begrenzt werden. Dadurch kann die Kettensäge noch sicherer gemacht werden. Zudem kann nach Aktivierung der Betriebsbereitschaft der Abtriebseinheit 140 durch das aktivieren des ersten und zweiten Freigabeelements 122a, 124a und/oder nach einem tatsächlichem Betrieb der Abtriebseinheit 140, das erste Freigabeelement 124a zumindest vorübergehend, beispielsweise für eine begrenzte zweite Dauer, deaktiviert werden, ohne dass dadurch die Freigabe des Bedienelements 160 zum Aktivieren der Abtriebseinheit 140 aufgehoben wird.

Anders ausgedrückt kann auch nach einem Betrieb der Antriebseinheit 140 eine Betätigung des Bedienelements 160 und/oder eine Betätigung des ersten Freigabeelements 124a um eine zweite vorgegebene Zeitdauer, vorzugsweise um maximal eine Sekunde, unterbrochen werden, ohne dass eine Deaktivierung der Sicherheitsschaltanordnung 120 veranlasst wird. Dadurch kann die Hand eines Bedieners vorübergehend vom Haupthandgriff 112 gelöst werden, beispielsweise um ein Werkstück zurechtzurücken, ohne dass die gesamte Aktivierungsprozedur der Kettensäge 100 erneut vollzogen werden muss, was vorteilhaft Zeit spart und damit Komfort bei gleichzeitig hoher Sicherheit ermöglicht. Ergänzend kann bei freigegebenem Bedienelement 160 und/oder bei aktivierter Antriebseinheit 140 und/oder bei freigegebenem ersten Freigabeelement 124a, vorzugsweise innerhalb einer weiteren vorgegebenen Zeitdauer, eine erneute Betätigung des Bedienelements 160 oder des ersten Freigabeelements 124a erforderlich sein, um eine Deaktivierung einer, der Sicherheitsschaltanordnung 120 zugeordneten Steuerschaltung 170, zu verhindern.

Gemäß einer Ausführungsform ist die Steuerschaltung 170 zumindest dazu ausgebildet, eine zeitliche Abfolge der Betätigung des ersten und/oder zweiten Freigabeelements 122a, 124a und/oder des Bedienelements 160 zu detektieren. Dabei ist die Steuerschaltung 170 vorzugsweise durch eine Aktivierung der Sicherheitsschaltanordnung 120 aktivierbar.

Ferner wird vorgeschlagen, dass im Falle, dass das zweite Freigabeelement 122a bei einer Betätigung des ersten Freigabeelements 124a bereits in der Freigabeposition 303a ist, eine Anzeigevorrichtung 130 visuell, taktil und/oder auditiv ein Signal ausgibt, um zu signalisieren, dass das zweie Freigabeelement 122a in der "falschen" Position bzw. bereits in der Freigabeposition 303a ist. Somit wird insbesondere einem Anwender signalisiert, dass vor Inbetriebnahme der Antriebseinheit 140 oder vor Betätigung des Betätigungselements erst noch das zweite Freigabelelement 122a aus der Freigabeposition 303a erneut in die Sperrposition 302a überführen werden muss. Sonst kann zumindest keine elektronische Freigabe des Bedienelements 160 zum Aktivieren der Antriebseinheit 140 erfolgen.

Darüber hinaus kann die Kettensäge 100 aber ergänzend oder alternativ zur vorgenannten Anzeigevorrichtung 130 auch eine weitere Anzeigevorrichtung 130a aufweisen.

Nachfolgend wird ein Verfahren zur Inbetriebnahme der Kettensäge 100 gemäß einer Ausführungsform, bzw. ein Verfahren zum Aktivieren der Antriebseinheit 140 zum Antreiben der Kettensäge 100 gemäß einer Ausführungsform, beschrieben. Vorzugsweise wird durch eine Betätigung des ersten Freigabeelements 124a bzw. des Hauptschalters eine Steuereinheit bzw. ein PCB der Kettensäge bestromt bzw. aktiviert. Ferner wird vor einem Starten der Antriebseinheit 140 die Sicherheitsschaltanordnung 120 aktiviert insbesondere in Verbindung mit der Betätigung des ersten Freigabeelements 124a. Gemäß Fig. 14 wird in einem Schritt 1010 durch das Betätigen bzw. Aktivieren des ersten Freigabeelements 124a wird die ersten Freigabefunktion 314a ausgeführt und damit die Sicherheitsschaltanordnung 120 aktiviert. In einem Schritt 1020 prüft daraufhin die Sicherheitsschaltanordnung 120, ob das zweite Freigabeelement 122a in einer aktivierten Stellung (Freigabestellung 303a) oder deaktivierten Stellung (Sperrstellung 302a) ist. Dies kann beispielsweise durch Abfrage einer Schalterspannung des zweiten Freigabeelements 122a erfolgen. Sofern das zweite Freigabeelement 122a in der Sperrstellung 302a ist, wird in einem Schritt 1050 durch Überführen des zweiten Freigabeelements 122a von der inaktiven in die aktive Stellung bzw. von der Sperrstellung 302a in die Freigabestellung 303a die zweite Freigabefunktion 312a ausgeführt. Dadurch wird eine Aktivierung der Antriebseinheit 140 über eine Betätigung des Bedienelements 160 ermöglicht. Somit ist das Bedienelement 160 freigegeben und kann bei einer Betätigung die Antriebseinheit 140 starten. Durch Betätigung des Bedienelements 160 startet in einem Schritt 1080 dann die Antriebseinheit 140.

Optional kann es in einem Schritt 1060 erforderlich sein, dass die Ausführung der zweiten Freigabefunktion 312a innerhalb einer ersten vorgegebenen Zeitdauer, vorzugsweise innerhalb von 5 Sekunden nach Initiierung der Aktivierung der Sicherheitsschaltanordnung 120, bzw. nach Ausführen der ersten Freigabefunktion 314a, erfolgen muss.

Optional kann ferner in einem Schritt 1090 nach einem Betrieb der Antriebseinheit 140 und/oder nach (erfolgreichem) Ausführen der zweiten Freigabefunktion 312a eine Aktivierung des ersten Freigabeelements 124a (und des Bedienelements 160) um eine insbesondere zweite vorgegebene Zeitdauer, vorzugsweise um maximal eine Sekunde, unterbrochen werden, ohne eine Deaktivierung der Sicherheitsschaltanordnung 120 zu veranlassen. Somit kann bei einer erneuten Aktivierung des ersten Freigabeelements 124a und einem darauffolgenden oder zumindest gleichzeitigen Betätigung des Bedienelements 160 innerhalb der der zweiten vorgegebenen Zeitdauer die Antriebseinheit 140 starten.

Hingegen kann bei einem Überschreiten der ersten vorgegebenen Zeitdauer und/oder der zweiten vorgegebenen Zeitdauer die Antriebseinheit 140 deaktiviert werden, insbesondere wobei eine Steuerschaltung 170, die der Sicherheitsschaltanordnung 120 zugeordnet ist und die zumindest dazu ausgebildet ist, eine zeitliche Abfolge der Betätigung des ersten und/oder zweiten Freigabeelements 122a, 124a und/oder des Bedienelements 160 zu detektieren, deaktiviert wird.

Sofern das zweite Freigabeelemente 122a bei Überprüfung durch die Sicherheitsschalteranordnung 120 bzw. nach Ausführen der ersten Freigabefunktion 314a bereits in der aktivierten Stellung (Freigabestellung 303a) ist, wird dadurch noch keine Aktivierung der Antriebseinheit 140 über eine Betätigung des Bedienelement 160 ermöglicht. Vielmehr muss in einem Schritt 1040 das zweite Freigabeelement 122a erst in die deaktivierte Stellung (Sperrstellung 302a) überführt werden. Dann kann es erneut in die aktive Stellung (Freigabestellung 303a) überführt werden. Erst dadurch wird eine Aktivierung der Antriebseinheit 140 über eine Betätigung des Bedienelements 160 ermöglicht. Vorzugsweise überprüft die Sicherheitsschaltanordnung 120 dazu kontinuierlich oder diskontinuierlich (beispielsweise bei Aktivierung oder Deaktivierung des zweiten des ersten oder zweite Freigabeelement 122a, 124a ob das zweite Freigabeelement 122a in einer aktivierten Stellung (Freigabestellung 303a) oder deaktivierten Stellung (Sperrstellung 302a) ist.

Optional kann beispielsweise in einem Schritt 1030 eine Anzeigevorrichtung 130 visuell, taktil und/oder akustisch eine Anzeige ausgeben, sofern das zweite Freigabeelemente 122a bei Überprüfung durch die Sicherheitsschalteranordnung 120 bzw. nach Ausführen der ersten Freigabefunktion 314a bereits in der aktivierten Stellung (Freigabestellung 303a) ist. Dadurch erhält ein Anwender einen Hinweis, dass ohne vorherige Deaktivierung, also Überführung des zweiten Freigabeelements 122a in die Sperrstellung 302a und erneute Überführung in die Freigabestellung 303a keine Aktivierung der Antriebseinheit 140, insbesondere durch Betätigen des Bedienelements 160, möglich ist. Im Übrigen ist es im vorgenannten Ausführungsbeispiel unerheblich ob bei der Deaktivierung des zweiten Freigabeelements 122a das erste Freigabeelement 124a aktiviert oder deaktiviert ist; es könnte aber auch eine Rolle spielen.

In einer nicht dargestellten Ausführungsform kann die Anzeige einem Anwender sogar den nächsten Schritt zur Inbetriebnahme der Kettensäge 100 signalisieren, in diesem Fall die Deaktivierung und erneute Aktivierung des zweiten Freigabeelements 122a anzeigen. Durch die Anzeigevorrichtung 130 oder eine weitere Anzeigevorrichtung 130a kann in dem Schritt 1030 auch eine Aktivierung der Sicherheitsschaltanordnung 120a und/oder eine Betriebsbereitschaft der Antriebseinheit 140 angezeigt werden, und/oder ob sich das zweite Freigabeelement 122a in einer aktivierten oder deaktivierten Stellung bzw. einer Freigabestellung 303a oder Sperrstellung 302a befindet und/oder wie viel Zeit für eine erneute Betätigung eines Freigabeelements 124a oder des Bedienelements 160 bis zu einer Deaktivierung der Sicherheitsschaltanordnung 120 verbleibt.

## Patentansprüche

1. Kettensäge (100) mit einem Gehäuse (110), in dem eine Antriebseinheit (140) zum Antreiben einer Sägekette (144) angeordnet ist, wobei an dem Gehäuse (110) ein Haupthandgriff (112) und ein Hilfshandgriff (115) angeordnet sind, wobei dem Haupthandgriff (112) ein Bedienelement (160) zum Aktivieren der Antriebseinheit (140) zugeordnet ist, und wobei dem Hilfshandgriff (115) ein Handschutz (117) zum Aktivieren einer Bremsvorrichtung (180) zugeordnet ist, wobei eine Sicherheitsschaltanordnung (120) zur Aktivierung und/oder Deaktivierung der Antriebseinheit (140) vorgesehen ist, der ein erstes und zweites Freigabeelement (122a, 124a) zugeordnet ist, wobei das erste Freigabeelement (124a) zur Ausführung einer ersten Freigabefunktion (314a) aktivierbar ist, um eine Aktivierung der Sicherheitsschaltanordnung (120) zu initiieren, und wobei das zweite Freigabeelement (122a) zur Ausführung einer zweiten Freigabefunktion (312a) aktivierbar ist, um eine Aktivierung der Antriebseinheit (140) über das Bedienelement (160) zu ermöglichen, wobei das erste Freigabeelement (124a) dem Haupthandgriff (112) und das zweite Freigabeelement (122a) dem Hilfshandgriff (115) und/oder Handschutz (117) zugeordnet ist, und das erste Freigabeelement (124a) als Anwesenheitssensor, insbesondere als Handhebel (119), als Sicherheits-Sperrelement und/oder Touchelement (224, 624) ausgebildet ist, **dadurch gekennzeichnet, dass** das zweite Freigabeelement (122a) zur Ausführung der zweiten Freigabefunktion (312a) innerhalb von einer ersten vorgegebenen Zeitdauer (t1, t3), vorzugsweise innerhalb von 5 Sekunden nach Initiierung der Aktivierung der Sicherheitsschaltanordnung (120), aktivierbar ist, um eine Freigabe des Bedienelements (160) zum Aktivieren der Antriebseinheit (140) zu bewirken.

2. Kettensäge nach einem der vorhergehenden Ansprüche, **dadurch gekennzeichnet, dass** das erste Freigabeelement (124a) elektrisch und/oder mechanisch mit dem Bedienelement (160) verbunden ist, insbesondere mit dem Bedienelement (160) gekoppelt ist.

3. Kettensäge nach einem der vorhergehenden Ansprüche, **dadurch gekennzeichnet, dass** das erste Freigabeelement (124a) als Hauptschalter der Kettensäge ausgebildet ist.

4. Kettensäge nach einem der vorhergehenden Ansprüche, **dadurch gekennzeichnet, dass** eine Anzeigevorrichtung (130) vorgesehen ist zum visuellen, taktilen und/oder akustischen Anzeigen einer Aktivierung der Sicherheitsschaltanordnung (120) und/oder eine Betriebsbereitschaft der Antriebseinheit (140) und/oder ob sich das zweite Freigabeelement (122a) in einer Freigabestellung (303a) oder Sperrstellung (302a) befindet und/oder wie viel Zeit für eine erneute Betätigung eines Freigabeelements (124a) oder des Bedienelements (160) verbleibt, und/oder zur Anzeige einer Betätigungsreihenfolge des ersten und zweiten Freigabeelements (122a, 124a).

5. Kettensäge nach einem der vorhergehenden Ansprüche, **dadurch gekennzeichnet, dass** nach einem Betrieb der Antriebseinheit (140) eine Betätigung des Bedienelements (160) und/oder eine Betätigung des ersten Freigabeelements (124a) um eine zweite vorgegebene Zeitdauer (t2, t4), vorzugsweise um maximal eine Sekunde, unterbrechbar ist, ohne eine Deaktivierung der Sicherheitsschaltanordnung (120) zu veranlassen.

6. Kettensäge nach einem der vorhergehenden Ansprüche, **dadurch gekennzeichnet, dass** der Sicherheitsschaltanordnung (120) eine Steuerschaltung (170) zugeordnet ist, die zumindest dazu ausgebildet ist, eine zeitliche Abfolge der Betätigung des ersten und/oder zweiten Freigabeelements (122a, 124a) und/oder des Bedienelements (160) zu detektieren.

7. Kettensäge nach Anspruch 6, **dadurch gekennzeichnet, dass** die Steuerschaltung (170) durch eine Aktivierung der Sicherheitsschaltanordnung (120) aktivierbar ist.

8. Kettensäge nach Anspruch 6 oder 7, **dadurch gekennzeichnet, dass** bei aktivierter Antriebseinheit (140) und/oder bei freigegebenem zweiten Freigabeelement (122a) und/oder bei freigegebenem Bedienelement (160) innerhalb von einer vorgegebenen Zeitdauer (t2, t4, t6), vorzugsweise innerhalb von einer Sekunde, eine Betätigung des Bedienelements (160) oder des ersten Freigabeelements (124a) erforderlich ist, um eine Deaktivierung der Steuerschaltung (170) zu verhindern.

9. Kettensäge nach einem der vorhergehenden Ansprüche, **dadurch gekennzeichnet, dass** eine Betätigung insbesondere Aktivierung des erstes Freigabeelements (124a) eine Bestromung bzw. Aktivierung einer Steuereinheit und/oder der Sicherheitsschaltanordnung (120) der Kettensäge bewirkt, insbesondere wobei die Sicherheitsschaltanordnung (120) eine Aktivierung oder Deaktivierung bzw. eine Stellung (302a, 303a) des zweiten Freigabeelements (122a) überprüft.

10. Verfahren zum Aktivieren einer Antriebseinheit (140) zum Antreiben einer Kettensäge (100), aufweisend ein Haupthandgriff (112) und ein Hilfshandgriff (115), wobei dem Haupthandgriff (112) ein Bedienelement (160) zum Aktivieren einer Antriebseinheit (140) und ein insbesondere mit dem Bedienelemente (160) mechanisch und/oder elektrisch verbundenes erstes Freigabeelement (124a) zugeordnet ist, wobei dem Hilfshandgriff (115) ein Handschutz (117) zum Aktivieren einer Bremsvorrichtung (180) zugeordnet ist, wobei eine Sicherheitsschaltanordnung (120) zur Aktivierung und/oder Deaktivierung der Antriebseinheit (140) vorgesehen ist, der das erste und ein zweites Freigabeelement (122a, 124a) zugeordnet ist, wobei das erste Freigabeelement (124a) zur Ausführung einer ersten Freigabefunktion (314a) aktivierbar ist, um eine Aktivierung der Sicherheitsschaltanordnung (120) zu initiieren und wobei das erste Freigabeelement (124a) ein Anwesenheitssensor und/oder Hauptschalter ist, wobei das zweite Freigabeelement (122a) dem Hilfshandgriff (115) und/oder Handschutz (117) zugeordnet ist und zur Ausführung einer zweiten Freigabefunktion (312a) aktivierbar ist, um eine Aktivierung der Antriebseinheit (140a) über das Bedienelement (160a) zu ermöglichen, und wobei eine Aktivierung der Antriebseinheit (140a) folgende Schritte aufweist:
a. Ausführen der ersten Freigabefunktion (314a) zum Aktivieren der Sicherheitsschaltanordnung (120a),
b. Prüfen der Sicherheitsschaltanordnung (120), ob das zweite Freigabeelement (122a) in einer aktivierten oder deaktivierten Stellung ist,
c. Ausführen der zweiten Freigabefunktion (312a) durch überführen des zweiten Freigabeelements (122a) aus einer deaktivierten Stellung in eine aktivierte Stellung, innerhalb einer ersten vorgegebenen Zeitdauer nach Initiierung der Aktivierung der Sicherheitsschaltanordnung (120),
d. Starten der Antriebseinheit (140) bei Betätigung des Bedienelements (160),

11. Verfahren nach Anspruch 10 aufweisend den Schritt, dass mittels einer visuell, taktil und/oder akustisch Anzeigevorrichtung (130a) und/oder einer weiteren Anzeigevorrichtung (130b) angezeigt wird, ob die Sicherheitsschaltanordnung 120a aktiv ist und/oder das zweite Freigabeelement (122a) in einer aktivierten und/oder deaktivierten Stellung ist.

12. Verfahren nach Anspruch 10 oder 11 aufweisend den Schritt der Überführung des zweiten Freigabeelements (122a) aus der aktivierten in die deaktivierte Stellung, vor dem Schritt c nach Anspruch 10, sofern beim Ausführen der ersten Freigabefunktion (314a) zum Aktivieren der Sicherheitsschaltanordnung (120a) bereits das zweite Freigabeelement (122a) in der aktivierten Stellung ist, auszuführen vor der zweiten Freigabefunktion.

13. Verfahren nach Anspruch 10 bis 12 aufweisend den Schritt, das nach Ausführen der zweiten Freigabefunktion, das ersten Freigabeelements (124a) für eine zweite vorgegebene Zeitdauer, vorzugsweise um maximal eine Sekunde, deaktivierbar ist.

14. Verfahren nach Anspruch 10 bis 12 aufweisend den Schritt, dass nach Starten der Antriebseinheit (140) eine Deaktivierung des ersten Freigabeelements 124a und/oder des Bedienelements 160a, um eine insbesondere zweite vorgegebene Zeitdauer, vorzugsweise um maximal eine Sekunde, und erneutes Starten der Antriebseinheit (140) bei Betätigung des Bedienelements (160).

15. Verfahren nach Anspruch 10 bis 14, **dadurch gekennzeichnet, dass** nach einem Betrieb der Antriebseinheit (140) eine Betätigung des Bedienelements (160) um eine zweite vorgegebene Zeitdauer unterbrechbar ist, und bei einem Überschreiten der ersten vorgegebenen Zeitdauer und/oder der zweiten vorgegebenen Zeitdauer die Antriebseinheit (140) deaktiviert wird, wobei eine Steuerschaltung (170), die der Sicherheitsschaltanordnung (120) zugeordnet ist und die zumindest dazu ausgebildet ist, eine zeitliche Abfolge der Betätigung des ersten und/oder zweiten Freigabeelements (122a, 124a) und/oder des Bedienelements (160) zu detektieren, deaktiviert wird, insbesondere wobei nach einer Deaktivierung der Antriebseinheit (140) und der dadurch deaktivierten Steuerschaltung (170) zum erneuten Starten der Antriebseinheit (140), die Sicherheitsschaltanordnung (120) erneut aktiviert werden muss.

## Claims

1. Chainsaw (100) having a housing (110) in which a drive unit (140) for driving a saw chain (144) is arranged, wherein a main handle (112) and an auxiliary handle (115) are arranged on the housing (110), wherein the main handle (112) is assigned an operating element (160) for activating the drive unit (140), and wherein the auxiliary handle (115) is assigned a hand guard (117) for activating a brake device (180), wherein a safety switch arrangement (120) for activating and/or deactivating the drive unit (140) is provided, said safety switch arrangement (120) being assigned a first and second release element (122a, 124a), wherein the first release element (124a) is able to be activated to carry out a first release function (314a) in order to initiate activation of the safety switch arrangement (120), and wherein the second release element (122a) is able to be activated to carry out a second release function (312a) in order to allow activation of the drive unit (140) via the operating element (160), wherein the first release element (124a) is assigned to the main handle (112) and the second release element (122a) is assigned to the auxiliary handle (115) and/or hand guard (117), and the first release element (124a) is in the form of a presence sensor, in particular of a hand lever (119), of a safety blocking element and/or touch element (224, 624), **characterized in that** the second release element (122a) is able to be activated to carry out the second release function (312a) within a first predefined time period (t1, t3), preferably within 5 seconds following initiation of the activation of the safety switch arrangement (120), in order to bring about releasing of the operating element (160) to activate the drive unit (140).

2. Chainsaw according to one of the preceding claims, **characterized in that** the first release element (124a) is connected electrically and/or mechanically to the operating element (160), in particular coupled to the operating element (160).

3. Chainsaw according to either of the preceding claims, **characterized in that** the first release element (124a) is in the form of a main switch of the chainsaw.

4. Chainsaw according to one of the preceding claims, **characterized in that** a display device (130) is provided for the visual, tactile and/or acoustic display of activation of the safety switch arrangement (120) and/or operational readiness of the drive unit (140) and/or whether the second release element (122a) is in a release position (303a) or a blocking position (302a) and/or how much time remains for renewed actuation of a release element (124a) or of the operating element (160), and/or to display an actuation sequence of the first and second release element (122a, 124a).

5. Chainsaw according to one of the preceding claims, **characterized in that**, following operation of the drive unit (140), actuation of the operating element (160) and/or actuation of the first release element (124a) is able to be interrupted for a second predefined time period (t2, t4), preferably for at most one second, without causing the safety switch arrangement (120) to be deactivated.

6. Chainsaw according to one of the preceding claims, **characterized in that** the safety switch arrangement (120) is assigned a control circuit (170) which is configured at least to detect a temporal sequence of the actuation of the first and/or second release element (122a, 124a) and/or of the operating element (160) .

7. Chainsaw according to Claim 6, **characterized in that** the control circuit (170) is able to be activated by activation of the safety switch arrangement (120) .

8. Chainsaw according to Claim 6 or 7, **characterized in that**, with the drive unit (140) activated and/or with the second release element (122a) released and/or with the operating element (160) released, actuation of the operating element (160) or of the first release element (124a) is required within a predefined time period (t2, t4, t6), preferably within one second, in order to prevent deactivation of the control circuit (170).

9. Chainsaw according to one of the preceding claims, **characterized in that** actuation, in particular activation, of the first release element (124a) causes a control unit and/or the safety switch arrangement (120) of the chainsaw to be energized or activated, in particular wherein the safety switch arrangement (120) verifies activation or deactivation or a position (302a, 303a) of the second release element (122a).

10. Method for activating a drive unit (140) for driving a chainsaw (100) having a main handle (112) and an auxiliary handle (115), wherein the main handle (112) is assigned an operating element (160) for activating a drive unit (140) and a first release element (124a) connected mechanically and/or electrically in particular to the operating element (160), wherein the auxiliary handle (115) is assigned a hand guard (117) for activating a brake device (180), wherein a safety switch arrangement (120) for activating and/or deactivating the drive unit (140) is provided, said safety switch arrangement (120) being assigned a first and a second release element (122a, 124a), wherein the first release element (124a) is able to be activated to carry out a first release function (314a) in order to initiate activation of the safety switch arrangement (120) and wherein the first release element (124a) is a presence sensor and/or main switch, wherein the second release element (122a) is assigned to the auxiliary handle (115) and/or hand guard (117) and is able to be activated to carry out a second release function (312a) in order to allow activation of the drive unit (140a) via the operating element (160a), and wherein activation of the drive unit (140a) has the following steps:
a. carrying out the first release function (314a) to activate the safety switch arrangement (120a),
b. checking the safety switch arrangement (120) to check whether the second release element (122a) is in an activated or deactivated position,
c. carrying out the second release function (312a) by transferring the second release element (122a) from a deactivated position into an activated position within a first predefined time period following initiation of the activation of the safety switch arrangement (120),
d. starting the drive unit (140) upon actuation of the operating element (160).

11. Method according to Claim 10, having the step of displaying, by means of a visual, tactile and/or acoustic display device (130a) and/or a further display device (130b), whether the safety switch arrangement (120a) is active and/or the second release element (122a) is in an activated and/or deactivated position.

12. Method according to Claim 10 or 11, having the step of transferring the second release element (122a) from the activated position into the deactivated position before step c according to Claim 10, provided that, when the first release function (314a) for activating the safety switch arrangement (120a) is carried out, the second release element (122a) is already in the activated position, to be carried out before the second release function.

13. Method according to Claims 10 to 12, having the step that, after the second release function has been carried out, the first release element (124a) is able to be deactivated for a second predefined time period, preferably for at most one second.

14. Method according to Claims 10 to 12, having the step, after the drive unit (140) has been started, of deactivating the first release element (124a) and/or the operating element (160a) for an in particular second predefined time period, preferably for at most one second, and restarting the drive unit (140) upon actuation of the operating element (160).

15. Method according to Claims 10 to 14, **characterized in that**, following operation of the drive unit (140), actuation of the operating element (160) is able to be interrupted for a second predefined time period, and if the first predefined time period and/or the second predefined time period is exceeded, the drive unit (140) is deactivated, wherein a control circuit (170), which is assigned to the safety switch arrangement (120) and which is configured at least to detect a temporal sequence of the actuation of the first and/or second release element (122a, 124a) and/or of the operating element (160), is deactivated, in particular wherein, following deactivation of the drive unit (140) and control circuit (170) that is deactivated as a result, in order to restart the drive unit (140) the safety switch arrangement (120) has to be reactivated.

## Revendications

1. Tronçonneuse (100) comprenant un carter (110) dans lequel est disposée une unité d'entraînement (140) servant à entraîner une chaîne à scier (144), une poignée principale (112) et une poignée auxiliaire (115) étant disposées sur le carter (110), un élément de commande (160) servant à activer l'unité d'entraînement (140) étant associé à la poignée principale (112), et un garde-main (117) servant à activer un dispositif de freinage (180) étant associé à la poignée auxiliaire (115), dans laquelle un agencement de commutation de sécurité (120) servant à activer et/ou à désactiver l'unité d'entraînement (140) est prévu auquel sont associés un premier et un deuxième élément de libération (122a, 124a), le premier élément de libération (124a) pouvant être activé pour effectuer une première fonction de libération (314a) afin de lancer une activation de l'agencement de commutation de sécurité (120), et le deuxième élément de libération (122a) pouvant être activé pour effectuer une deuxième fonction de libération (312a) afin de permettre une activation de l'unité d'entraînement (140) par l'intermédiaire de l'élément de commande (160), le premier élément de libération (124a) étant associé à la poignée principale (112) et le deuxième élément de libération (122a) étant associé à la poignée auxiliaire (115) et/ou au garde-main (117), et le premier élément de libération (124a) étant réalisé sous la forme d'un capteur de présence, en particulier d'un levier à main (119), d'un élément de verrouillage de sécurité et/ou d'un élément tactile (224, 624),
**caractérisée en ce que** pour l'exécution de la deuxième fonction de libération (312a), le deuxième élément de libération (122a) peut être activé dans une première période de temps prédéfinie (t1, t3), de préférence dans un délai de 5 secondes après le lancement de l'activation de l'agencement de commutation de sécurité (120), afin de provoquer une libération de l'élément de commande (160) pour activer l'unité d'entraînement (140).

2. Tronçonneuse selon l'une quelconque des revendications précédentes, **caractérisée en ce que** le premier élément de libération (124a) est relié électriquement et/ou mécaniquement à l'élément de commande (160), en particulier couplé à l'élément de commande (160).

3. Tronçonneuse selon l'une quelconque des revendications précédentes, **caractérisée en ce que** le premier élément de libération (124a) est réalisé sous la forme d'un interrupteur principal de la tronçonneuse.

4. Tronçonneuse selon l'une quelconque des revendications précédentes, **caractérisée en ce qu'**un dispositif indicateur (130) est prévu servant à l'indication visuelle, tactile et/ou acoustique d'une activation de l'agencement de commutation de sécurité (120) et/ou d'une disponibilité opérationnelle de l'unité d'entraînement (140) et/ou si le deuxième élément de libération (122a) se trouve dans une position de libération (303a) ou une position de verrouillage (302a) et/ou combien de temps il reste pour un nouvel actionnement d'un élément de libération (124a) ou de l'élément de commande (160) et/ou à l'indication d'un ordre d'actionnement du premier et du deuxième élément de libération (122a, 124a).

5. Tronçonneuse selon l'une quelconque des revendications précédentes, **caractérisée en ce qu'**après un fonctionnement de l'unité d'entraînement (140), un actionnement de l'élément de commande (160) et/ou un actionnement du premier élément de libération (124a) peut/peuvent être interrompu(s) pendant une deuxième période de temps prédéfinie (t2, t4), de préférence pendant un maximum d'une seconde, sans provoquer la désactivation de l'agencement de commutation de sécurité (120).

6. Tronçonneuse selon l'une quelconque des revendications précédentes, **caractérisée en ce qu'**un circuit de commande (170) est associé à l'agencement de commutation de sécurité (120) et est réalisé au moins pour détecter un ordre chronologique de l'actionnement du premier et/ou du deuxième élément de libération (122a, 124a) et/ou de l'élément de commande (160).

7. Tronçonneuse selon la revendication 6, **caractérisée en ce que** le circuit de commande (170) peut être activé par une activation de l'agencement de commutation de sécurité (120).

8. Tronçonneuse selon la revendication 6 ou 7, **caractérisée en ce que** lorsque l'unité d'entraînement (140) est activée et/ou le deuxième élément de libération (122a) est libéré et/ou l'élément de commande (160) est libéré, dans une période de temps prédéfinie (t2, t4, t6), de préférence dans un délai d'une seconde, un actionnement de l'élément de commande (160) ou du premier élément de libération est nécessaire (124a) pour empêcher une désactivation du circuit de commande (170).

9. Tronçonneuse selon l'une quelconque des revendications précédentes, **caractérisée en ce qu'**un actionnement, en particulier une activation, du premier élément de libération (124a) provoque une alimentation électrique ou activation d'une unité de commande et/ou de l'agencement de commutation de sécurité (120) de la tronçonneuse, en particulier dans laquelle l'agencement de commutation de sécurité (120) vérifie une activation ou désactivation ou une position (302a, 303a) du deuxième élément de libération (122a).

10. Procédé permettant d'activer une unité d'entraînement (140) servant à entraîner une tronçonneuse (100) présentant une poignée principale (112) et une poignée auxiliaire (115), dans lequel un élément de commande (160) servant à activer une unité d'entraînement (140) et un premier élément de libération (124a), en particulier relié mécaniquement et/ou électriquement à l'élément de commande (160), sont associés à la poignée principale (112), un garde-main (117) servant à activer un dispositif de freinage (180) étant associé à la poignée auxiliaire (115), dans lequel un agencement de commutation de sécurité (120) servant à l'activation et/ou à la désactivation de l'unité d'entraînement (140) est prévu auquel sont associés le premier et un deuxième élément de libération (122a, 124a), le premier élément de libération (124a) pouvant être activé pour effectuer une première fonction de libération (314a) afin de lancer une activation de l'agencement de commutation de sécurité (120), et le premier élément de libération (124a) étant un capteur de présence et/ou un interrupteur principal, le deuxième élément de libération (122a) étant associé à la poignée auxiliaire (115) et/ou au garde-main (117) et pouvant être activé pour effectuer une deuxième fonction de libération (312a) afin de permettre une activation de l'unité d'entraînement (140a) par l'intermédiaire de l'élément de commande (160a), et dans lequel une activation de l'unité d'entraînement (140a) présente les étapes suivantes consistant à :
a. effectuer la première fonction de libération (314a) pour activer l'agencement de commutation de sécurité (120a),
b. vérifier l'agencement de commutation de sécurité (120) pour savoir si le deuxième élément de libération (122a) se trouve dans une position activée ou désactivée,
c. effectuer la deuxième fonction de libération (312a) en transférant le deuxième élément de libération (122a) d'une position désactivée à une position activée, dans une première période de temps prédéfinie après le lancement de l'activation de l'agencement de commutation de sécurité (120),
d. démarrer l'unité d'entraînement (140) en cas d'actionnement de l'élément de commande (160).

11. Procédé selon la revendication 10, présentant l'étape consistant à indiquer au moyen d'un dispositif indicateur (130a) visuel, tactile et/ou acoustique et/ou d'un autre dispositif indicateur (130b) si l'agencement de commutation de sécurité (120a) est actif et/ou si le deuxième élément de libération (122a) se trouve dans une position activée et/ou désactivée.

12. Procédé selon la revendication 10 ou 11, présentant l'étape consistant à transférer le deuxième élément de libération (122a) de la position activée à la position désactivée, avant l'étape c) selon la revendication 10, dans la mesure où lors de l'exécution de la première fonction de libération (314a) pour activer l'agencement de commutation de sécurité (120a) le deuxième élément de libération (122a) se trouve déjà dans la position activée, est à exécuter avant la deuxième fonction de libération.

13. Procédé selon les revendications 10 à 12, présentant l'étape consistant à ce qu'après l'exécution de la deuxième fonction de libération, le premier élément de libération (124a) peut être désactivé pendant une deuxième période de temps prédéfinie, de préférence pendant un maximum d'une seconde.

14. Procédé selon les revendications 10 à 12, présentant l'étape consistant en ce qu'après le démarrage de l'unité d'entraînement (140), une désactivation du premier élément de libération (124a) et/ou de l'élément de commande (160a) pendant en particulier une deuxième période de temps prédéfinie, de préférence d'un maximum d'une seconde, et un redémarrage de l'unité d'entraînement (140) lors de l'actionnement de l'élément de commande (160) sont effectués.

15. Procédé selon les revendications 10 à 14, **caractérisée en ce qu'**après un fonctionnement de l'unité d'entraînement (140), un actionnement de l'élément de commande (160) peut être interrompu pendant une deuxième période de temps prédéfinie, et lors d'un dépassement de la première période de temps prédéfinie et/ou de la deuxième période de temps prédéfinie, l'unité d'entraînement (140) est désactivée, dans lequel un circuit de commande (170) qui est associé à l'agencement de commutation de sécurité (120), et qui au moins est réalisé pour détecter un ordre chronologique de l'actionnement du premier et/ou du deuxième élément de libération (122a, 124a) et/ou de l'élément de commande (160), est désactivé, en particulier dans lequel, après une désactivation de l'unité d'entraînement (140) et du circuit de commande (170) ainsi désactivé, l'agencement de commutation de sécurité (120) doit être réactivé pour le redémarrage de l'unité d'entraînement (140).
